# EUROPEAN PATENT SPECIFICATION

(11) **EP 2 278 051 B1**
(45) Date of publication and mention of the grant of the patent: **05.12.2012**
(21) Application number: 10182538.8
(22) Date of filing: 20.03.2008
(51) Int. Cl.: D01F 6/66, D01F 6/76, D01F 6/94

(54) **Improved fabrics**
Verbesserte Stoffe
Tissus améliorés

(30) Priority: 23.03.2007 US 896567 P; 18.12.2007 US 14485 P
(43) Date of publication of application: 26.01.2011
(62) Divisional of application: 08718136.8
(73) Proprietor: Solvay Specialty Polymers USA, LLC., Alpharetta, GA 30005 (US)
(72) Inventor: DiFrancia, Célene, CUMMING, GA 30041 (US); Looney, William, Sugar Hill, GA 30518 (US); Nagels, Pascale, 1030, Brussels (BE); Bhatnagar, Atul, ALPHARETTA, 30005 (US); Warkoski, Gregory, CUMMING, GA 300040 (US)
(74) Representative: Vande Gucht, Anne

(56) References cited:
- US-A- 5 149 581
- US-A- 5 205 968
- US-A- 5 290 906

## Description

### FIELD OF THE INVENTION

The present invention relates to fabrics featuring improved properties, useful in many applications, and in particular in industrial, medical and cleanup applications. The present invention relates also to filter assemblies and filtration systems incorporating such fabrics.

### DESCRIPTION OF THE RELATED ART

There is a need from demanding industries such as the aerospace, automotive, medical, military and safety industries for high performance fabrics featuring specific properties.

In several applications in the medical field, in particular in clean rooms, fabrics are in repeated contact with various pharmaceuticals and/or chemicals and are exposed to harsh conditions, as required e.g. by sterilization processes ; for this reason, fabrics should desirably exhibit high toughness, high abrasion resistance, high tenacity, high thermal stability, and high chemical resistance, including high resistance to hydrolysis.

Similar requirements are due in many industries such as the chemical industry where fabrics are in repeated contact with various chemicals including organic solvents such as acetone, methyl ethyl ketone, toluene and ethyl acetate, or acids such as sulfuric acid or nitric acid.

Moreover, another specific and demanding application of such fabrics is the particulate filtration from the flue gas emission of fuel power plants. World organizations and international agencies such as the International Energy Agency are concerned about the environmental impact of burning fossil fuels. The combustion of fossil fuels contributes to acid rain, global warming and air pollution due to the impurities and chemical composition of the fuels. One of the main byproducts of coal-burning power plant operation, nl. the flue gas from coal combustion, is discharged to the air through a flue gas stack. Flue gas produced during the combustion of coal is emitted at high temperatures, typically above 125°C and often above 160°C. Flue gas contains typically carbon dioxide, nitrogen, oxygen, fly ash, and water vapor, as well as other substances such as nitrogen oxides, sulfur oxides, hydrofluoric acid (HF), hydrochloric acid (HCl), sulfurous acid, nitric acid, sulfuric acid, mercury, sulfur nitrate (SNO₃), low levels of uranium, thorium, and other naturally-occurring radioactive isotopes and still many other toxic substances. Flue gas contains typically well above 5 vol. % of CO₂, very often above 10 vol. % of CO₂, and often 12.5 vol. % CO₂ or more. Flue gas contains typically well above 150 ppm of nitrogen oxides (NOₓ), very often above 300 ppm of NOₓ and often at least 400 ppm of NOₓ ; it may also comprises above 400 ppm, above 600 ppm, above 800 ppm, above 1000 ppm, above 1200 ppm or even above 1400 ppm of sulfur oxides (SOₓ), depending on the nature of the coal composition. "SOₓ" is a general term given to a mixture of sulfur oxides, the two major components of which being sulfur dioxide (SO₂) and sulfur trioxide (SO₃).On the other hand, "NOₓ" is a general term given to a mixture of nitrogen oxides, the two major components of which being nitric oxide (NO) and nitrogen dioxide (NO₂). The solid particle loading of flue gas is typically well above 1 mg/ m₀³ (m₀³ = m³ at 273 K and 101.3 kPa), very often above 5 mg/ m₀³ and often above 15 mg/ m₀³ ; it can sometimes be of at least 20, or even at least 25 mg/ m₀³. One of the major dangers related to coal combustion is the emission of solid particulate material entrained in the chemically aggressive flue gas described above. Examples of such solid material that are dangerous for public health include fly-ash, fine-fume type particles, various types of smoke, dust, etc. that are not easily separated from the flue gas by gravitational force. Power plants generally remove particulate from the flue gas with the use of various fabric filtration materials, commonly known as bag houses. The gases flow into and through the fabric, leaving solid particulate materials inside. Capital costs of operating bag houses are high but their efficiency is excellent and so they have become very popular. However, the specific selection of fabric used for the manufacture of bag houses can greatly affect the related efficiency and costs.

As bag houses are exposed for extended periods of time to the hot, abrasive and chemically aggressive environment of flue gas produced by the coal-burning plants, it would be highly desirable that fabrics used for their manufacture withstand such environment.

Cement plants cause similar environmental impacts to the ones associated with coal-burning power generation plants since they also generally use coal as primary fuel.

Fabrics made of polyethylene (PE) fibers, polyimide (PI) fibers, polytetrafluoroethylene (PTFE) fibers, aromatic polyamides fibers and glass fibers have been used in various applications, including industrial and air pollution control systems. Fabrics made out of other polymer materials have been used for different applications, depending on the environment, including the temperature and acidity levels of the application. Fabrics made of poly(phenylene sulphide) (PPS) fibers have been widely used up to now as part of filter systems in the coal-fired power generation industry.

There are unfortunately a number of drawbacks, however, with fabrics available on the market. For instance, the supply of certain polymers fibers is heavily limited so that filter manufacturers would like to benefit from an alternative and more technically preforming source of polymer fibers. Further, certain fabrics made of fibers such as PPS fibers, oxidatively degrade in acidic environments. When such fabrics are incorporated into filters, the oxidative breakdown can ultimately lead to clogged filter pores, reduced air flow and higher frequency of cleaning until filter replacement is required. Other fabrics feature low resistance to high temperature or repeated chemical treatments.

There is thus a need for improved fabrics, notably suitable for industrial, medical or air cleanup applications as described above, that would feature high tensile properties, high hydrolytic stability and high thermal resistance, while also performing outstanding chemical resistance, even at high temperatures. Such fabrics should further be made of a material easily shapeable into fibers. The specific selection of such material is as difficult as it is crucial for the encompassed applications.

US-A-5 149 581 describes polyether copolymers comprising repeating units represented by the following general formula 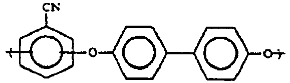 and the repeating units represented by the formula 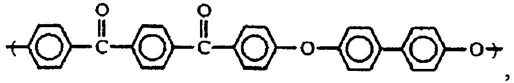 in a molar ratio ranging from 0.1 to 0.8. It also describes resin compositions comprising the above polyether copolymer and a heat-resistance thermoplastic resin, such as a polyethersulfone or a polyetheretherketone. According to US-A-5 149 581, the same polyether copolymer is also suitable as a material for the manufacture of fibers, which would excellent in heat resistance and in mechanical properties, and which would also have other advantages such as excellent solvent resistance and chemical resistance. US-A-5 149 581 teaches also that the polyether copolymer fibers are suitable for various applications, such as composites, woven fabrics and knitted fabrics.

US-A-5 205 968 describes a process for preparing a microporous membrane from an unsulfonated poly(etheretherketone)-type polymer, by forming a mixture of an unsulfonated poly(etheretherketone)-type polymer [such as VICTREX^{®} 450G poly(etheretherketone)], an amorphous polymer and a plasticizer, heating the resulting mixture into a membrane, quenching or coagulating the membrane and leaching the membrane ; the amorphous polymer can be notably a polysulfone (such as UDEL^{®} P1700 polysulfone), or a polyethersulfone. According to US-A-5 205 968, the so-prepared membrane would exhibit excellent solvent and temperature resistance, and would possess high tensile strength. US-A-5 205 968 teaches further that the membrane is useful for liquid separations such as ultrafiltration or microfiltration, and as porous microsupport for composite gas or liquid separation membrane.

US-A-5 290 906 describes a poly(arylene ether ketone) principally comprising recurring units represented by formula 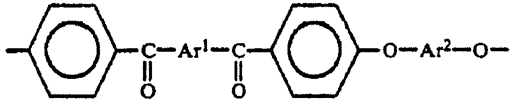 wherein Ar¹ denotes a certain naphthalene ring and Ar² denotes p-phenylene, p-p'-biphenylene or a certain naphthalene ring ; according to US-A-5 290 906, this poly(arylene ether ketone) would be excellent in solvent resistance. The poly(arylene ether ketone) of US-A-5 290 906 may be blended with resins such as polyarylene ethers, polysulfones, polyarylates, etc. US-A-5 290 906 teaches also that the poly(arylene ether ketone) can be molded into heat-resistant fibers, which in turn can be widely used in various industrial fiber applications, for example for the manufacture of certain mixed woven fabrics.

The present invention makes now available new fabrics featuring excellent properties such as high tensile properties, high hydrolytic stability, high thermal resistance, and outstanding chemical resistance that make them especially suitable for applications targeting elevated temperatures, harsh chemical and abrasive environments.

### SUMMARY OF THE INVENTION

A first aspect of the present invention relates to a fabric as defined in claim 1.

The fabric according to the present invention may find useful applications in the textile industry, aerospace, automotive, medical, military and safety industries. Accordingly, another aspect of the present invention is directed to the use of the fabric according to the present invention in any of the above mentioned applications.

The fabric of the present invention can be incorporated into different devices and systems. For example, the fabric can be incorporated into a filter device. Accordingly, another aspect of the present invention is directed to a filter device comprising the fabric as above described. A closely related thereto aspect of the present invention is directed to a filter assembly comprising a frame and a fabric mounted on said frame, wherein said fabric is the fabric as above described.

The filter assembly can be used for numerous applications, including but not limited to filter assemblies for industrial plants, such as coal burning power plants and cement plants. Accordingly, still another aspect of the present invention is directed to a filtration system comprising a plurality of filter assemblies, at least one of them being the filter assembly as above described; possibly, each filter assembly is as above described.

The filter assembly according to the present invention may be incorporated in filtration systems for gases/fluids in coal burning power generation plants or cement plants. Accordingly, still another aspect of the present invention is directed to a coal burning power generation plant or to a cement plant comprising the filtration system as above described.

Still another aspect of the present invention are directed to the use of the fabric or the filter device or the filter assembly as above described for the removal of solid particles from an acid gas. An acid gas may be any gas capable of reacting with water so as to generate H⁺ ions. The capability of a gas to react with water can be conventionally assessed at room temperature (23°C) and atmospheric pressure (1 atm) by putting said water under atmosphere of said gas for about 1 hour so as to obtain an aqueous medium, then measuring the pH of said aqueous medium ; a pH value substantially below 7.0 indicates that the gas is acid ; pH values below 6.0, 5.0, 4.0 or even 3.0 may be observed in certain instances. The acid gas may be a flue gas from a coal burning power generation plant. An acid gas is any gas The acid gas may contain carbon dioxide. The carbon dioxide content of said acid gas may exceed 1 vol. %, 2 vol. %, 5 vol. %, 10 vol. % or even 20 vol. %. The solid particle loading of said acid gas may exceed 1 µg/m₀³, 10 µg/m₀³, 100 µg/m₀³, 1000 µg/m₀³, 10 mg/m³, 20 mg/m³, 50 mg/m₀³ or even, in extreme situations, 1 g/m³.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein :
Figure 1 is a diagram illustrating a filter assembly comprising the fabric according to the present invention; and
Figure 2 is a diagram illustrating a filtration system (bag house) including filter assemblies according to the present invention.

### DETAILED DESCRIPTION OF THE INVENTION

### Description of the fabric

The term "fabric" is intended to denote a textile material comprised of a network of fibers often referred to as thread or yarn. Yarn is usually produced by spinning raw fibers on a spinning wheel to produce long strands. Fabrics are generally formed by weaving, knitting, crocheting, knotting, or pressing fibers together.

The fabric according to the present invention comprise the plurality of fibers (F) in a weight amount of above 1 %, 2 %, 5 %, 10 %, 20 %, 30%, 50 %, 75 %, 90 % or 95 %, based on the total weight of the fabric ; the fabric may consist essentially of, or even consists of, the plurality of fibers identical to the fiber (F) ; the fabric may comprise the plurality of fibers identical to the fiber (F) in a weight amount of less than 99 %, 98 %, 95 %, 90 %, 80 %, 70%, 50 %, 25 %, 10 % or 5 %, based on the total weight of the fabric. When the fabric is incorporated into a filter assembly, it comprises the plurality of fibers identical to the fiber (F) in a weight amount of generally above 10 %, preferably above 50 %, more preferably above 80%, still more preferably above 95 %, based on the total weight of the fabric.

The fabric may further comprise other conventional ingredients of fabrics, such as fibers other than the fiber (F). Non limitative examples of such fibers include : glass fibers; asbestos fibers; organic fibers formed from high temperature engineered resins like poly(benzothiazole) fibers, poly(benzimidazole) fibers, poly(benzoxazole) fibers, polyarylether fibers and aramide fibers; carbon fibers; PTFE fibers; boron fibers (e.g. obtained by deposition of boron microgranules on a tungsten or carbonate yarn); metal fibers; ceramic fibers like silicon nitride Si₃N₄; talc-glass fibers; calcium silicate fibers like wollastonite micro-fibers; silicon carbide fibers; metal borides fibers (e.g. TiB₂) and mixtures thereof ; the carbon fibers can be obtained notably by heat treatment and pyrolysis of different polymeric precursors such as, for example, rayon, polyacrylonitrile (PAN), aromatic polyamide or phenolic resin ; other carbon fibers useful for the present invention can be obtained from pitchy materials. The term "graphite fiber" intends to denote carbon fibers obtained by high temperature pyrolysis (over 2000°C) of carbon fibers, wherein the carbon atoms place in a way similar to the graphite structure. Certain carbon fibers useful for the present invention are chosen from the group composed of PAN based carbon fibers, pitch based carbon fibers, graphite fibers, and mixtures thereof.

The fabric of the present invention can be non-woven or woven. This fabric may find useful applications in the textile industry, aerospace, automotive, medical, military and safety industries. Non limitative examples of such applications include flame resistant materials, fire blocking felts, gaskets, hoses, belts, ropes, rechargeable battery separators, sterilizable fabrics, including in-situ webbing, military apparel, geotextiles, protective fabrics, threads, and composite filler materials, filters for utilities, cement plants, and chemical processes plants, chemical scrubber units, flame resistant textiles, protective apparel for environmentally aggressive environments, chemical handling, hazardous waste, radiation, tear resistance, impact resistance, protective fabrics, carpets, bedding, upholstery, woven and non-woven clothing, garments, and belts.

### Description of the polymer material (P)

The fabric comprising a plurality of fibers (F) comprising at least one polymer material (P), characterized in that the polymer material (P) is a blend (B12) composed of
- at least one poly(aryl ether ketone) (P1), wherein more than 50 wt. % of the recurring units of said poly(aryl ether ketone) (P1) are recurring units (R1) of one ore more of the following formulae : 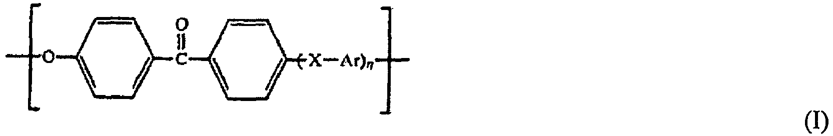 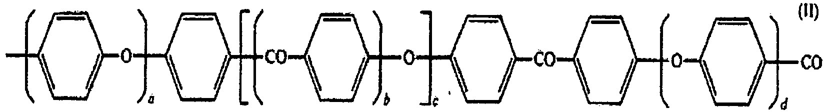 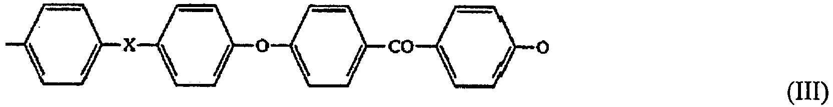 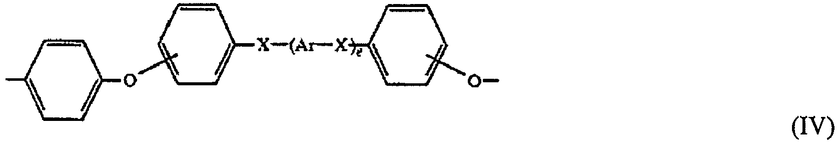 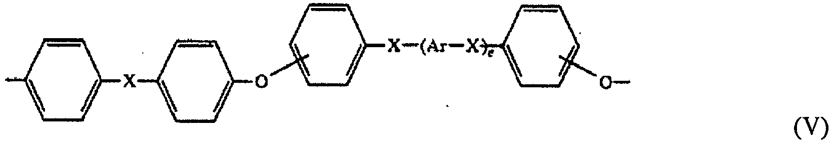
wherein : Ar is independently a divalent aromatic radical selected from phenylene, biphenylene or naphthylene ; X is independently O, C(=O) or a direct bond ; n is an integer of from 0 to 3 ; b, c, d and e are 0 or 1 ; a is an integer of 1 to 4 ; and, preferably, d is 0 when b is 1; and
at least one poly(aryl ether sulfone) (P2), wherein said poly(aryl ether sulfone) (P2) is poly(biphenyl ether sulfone), more than 50 wt. % of the recurring units of said poly(biphenyl ether sulfone) are recurring units (R2-d) of one or more formulae of the general type : 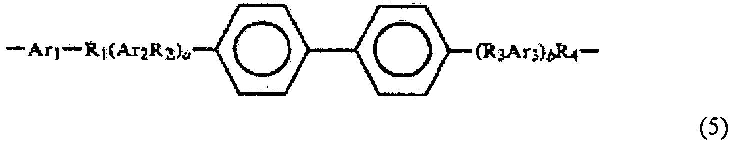 wherein R₁ through R₄ are -O-, -SO₂-, -S-, -CO-, with the proviso that least of R₁ through R₄ is -SO₂- and at least one of R₁ through R₄ is -O- ; Ar₁, Ar₂ and Ar₃ are arylene groups containing 6 to 24 carbon atoms, and are preferably phenylene or p-biphenylene; and a and b are either 0 or 1.

As used herein, the term "blend" refers to a physical combination of two or more different polymers, in contrast with "copolymers", where two or more different polymers are chemically linked to each other so as to form blocky structures and/or where polymerized recurring units of two or more different types are randomly distributed in a polymer chain. Usually, the different polymer components of the blend are diffused to some extent among each other inside the fiber (F), and, often, they are diffused intimately inside the fiber so that their individuality in the fiber is obscured.

As used herein, the term "polymer material" denotes indifferently a single polymer, or a blend composed of two or more polymers, as above defined.

The fabric comprising a plurality of fibers (F) according to the present invention can also further comprise one or more polymers (P*) other than those above listed. In the fiber (F), the weight ratio of polymer (P*) and of polymer material (P) [(P*):(P)] ranges usually from 0 to 5, preferably from 0 to less than 1.00, more preferably from 0 to 0.30 and still more preferably from 0 to 0.10. In certain embodiments of the present invention to which the preference may be given, the fiber (F) is essentially free, or even is free, of polymer (P*).

### The poly(aryl ether ketone) (P1).

Not just the recurring units (R1) but the whole poly(aryl ether ketone) (P1) is often free of sulfone groups. Yet, in certain particular instances, the poly(aryl ether ketone) (P1) may further contain sulfone groups ; the case being, in the poly(aryl ether ketone) (P1), the number of moles of sulfone groups over the number of moles of ketone groups ratio is typically below 0.5 and, typically also, less than 5 wt. % or even less 2.5 wt. % of the recurring units of the poly(aryl ether ketone) (P1) contain a sulfone group.

The poly(aryl ether ketone) (P1) comprises preferably above 75 wt. %, more preferably above 90 wt. %, and even more preferably above 95 wt. % of recurring units (R1). The most preferably, the poly(aryl ether ketone) (P1) contains recurring units (R1) essentially as sole, if not as sole, recurring units.

The poly(aryl ether ketone) (P1) is advantageously as described in U.S. Provisional Application S.N. 60/835,430, the whole content of which is herein incorporated by reference. Thus, the recurring units (R1) are advantageously of one ore more of the following formulae : 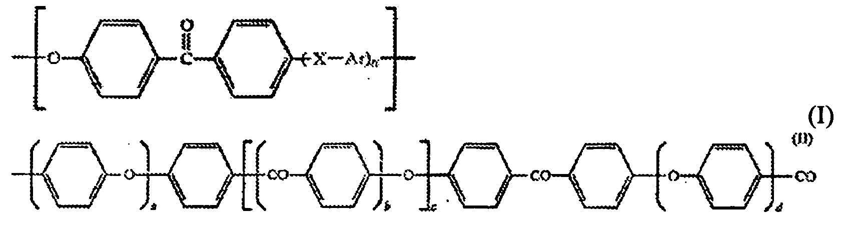 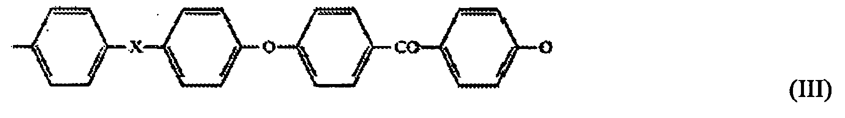 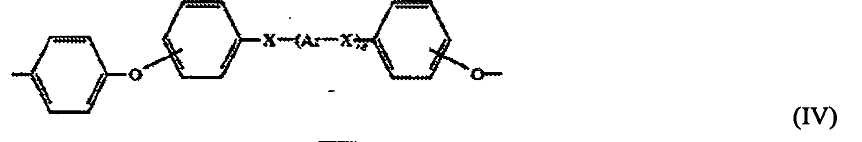 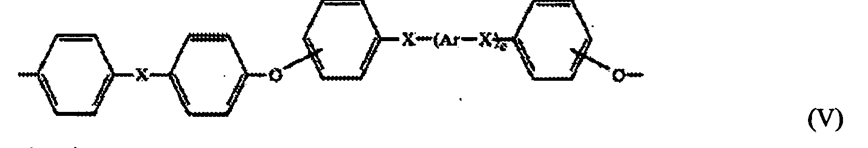 wherein :
■ Ar is independently a divalent aromatic radical selected from phenylene, biphenylene or naphthylene,
■ X is independently O, C(=O) or a direct bond,
■ n is an integer of from 0 to 3,
■ b, c, d and e are 0 or 1,
■ a is an integer of 1 to 4, and
■ preferably, d is 0 when b is 1.

Recurring units (R1) are preferably chosen from : 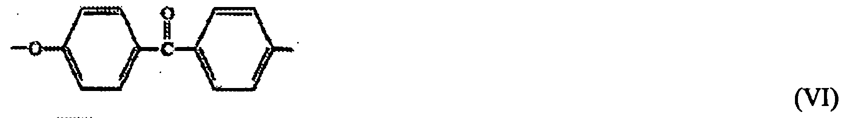 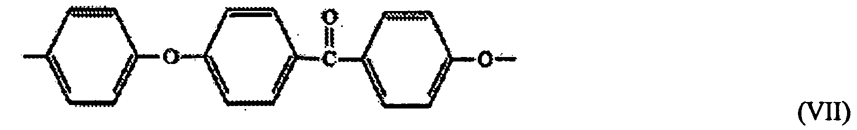 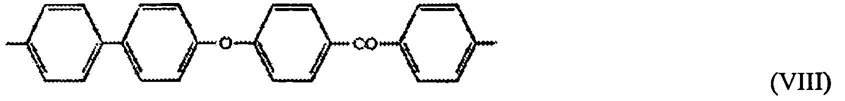 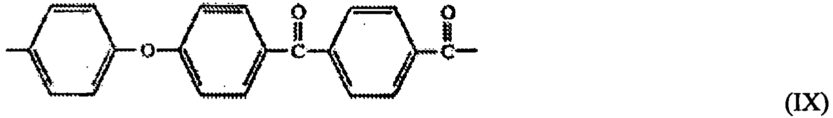 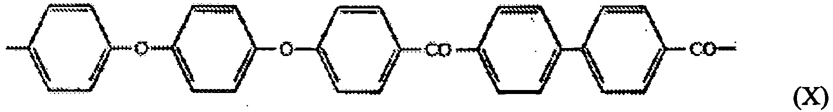 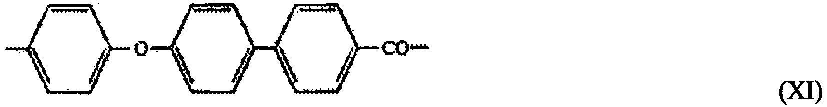 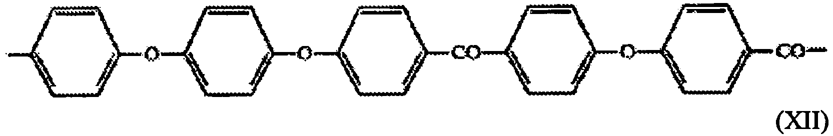 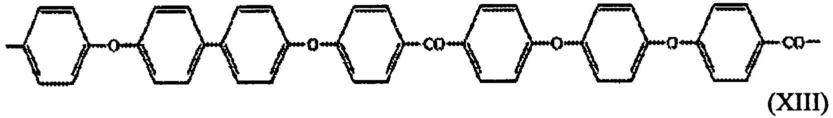 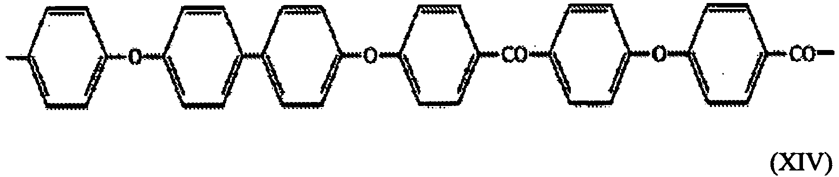 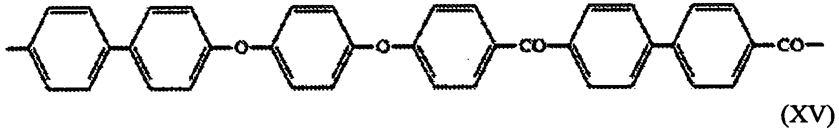 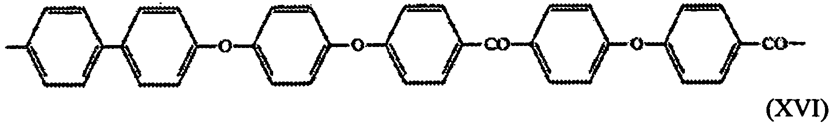 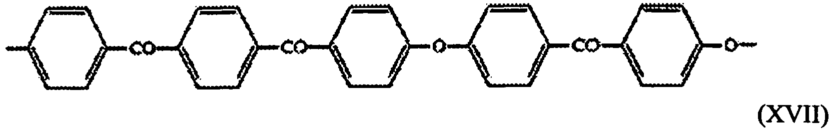 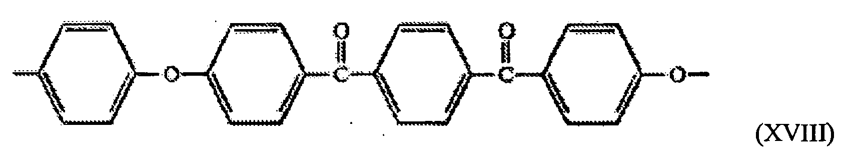 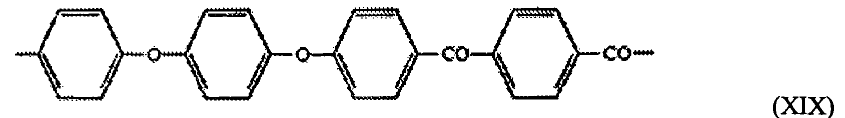 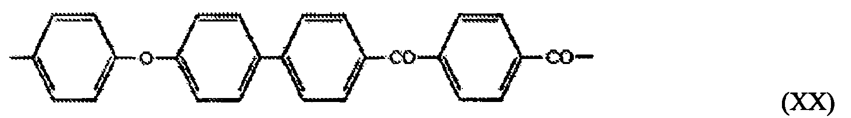 and

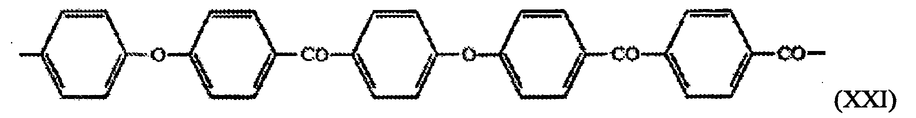

More preferably, recurring units (R1) are chosen from : 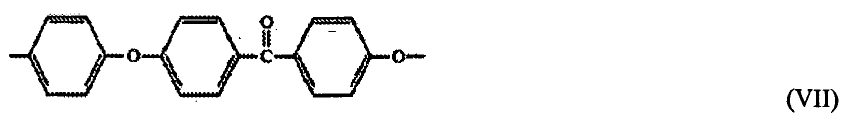 and

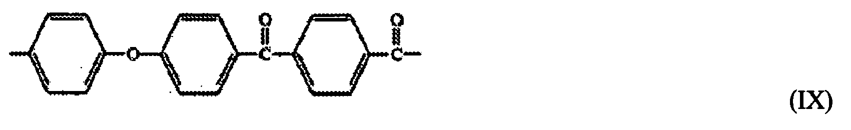

Still more preferably, recurring units (R1) are :

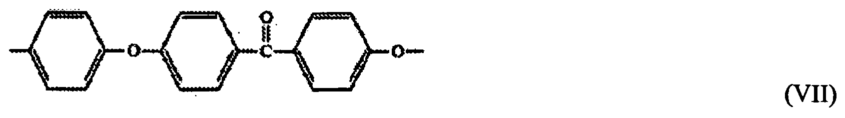

For the purpose of the present invention, a poly(ether ether ketone) is intended to denote any polymer of which more than 50 wt. % of the recurring units are recurring units (R1) of formula (VII).

Excellent results are obtained when the poly(aryl ether ketone) (P1) is a poly(ether ether ketone) homopolymer, i.e. a polymer of which essentially all, if not all, the recurring units are of formula (VII). VICTREX^{®} 150 P, VICTREX^{®} 380 P, VICTREX^{®} 450 P and VICTREX^{®} 90 P from Victrex Manufacturing Ltd., VESTAKEEP^{®} PEEK from Degussa, and KETASPIRE^{®} and GATONE^{®} PEEK from SOLVAY ADVANCED POLYMERS, L.L.C. are examples of poly(ether ether ketone) homopolymers.

### The poly(aryl ether sulfone) (P2).

Many poly(aryl ether sulfone)s suitable for use as the poly(aryl ether sulfone) (P2) are disclosed in WO 2006/094988, the whole content of which is hereby incorporated by reference.

The poly(aryl ether sulfone) (P2) may also be a blend composed of at least one poly(biphenyl ether sulfone) and at least one poly(aryl ether sulfone) other than a poly(biphenyl ether sulfone), such as a polyethersulfone.

In a certain embodiment of the present invention, the poly(aryl ether sulfone) (P2) is a polyethersulfone. To the purpose of the present invention, a polyethersulfone is intended to denote any polymer of which more than 50 wt. % of the recurring units are recurring units (R2-a) of formula (1) :

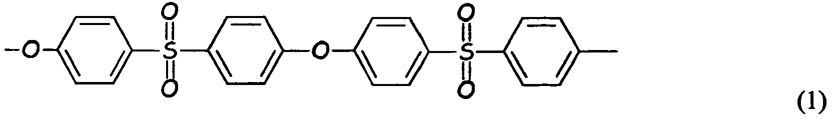

The polyethersulfone may be notably a homopolymer, or a copolymer such as a random or a block copolymer. When the polyethersulfone is a copolymer, its recurring units are advantageously a mix of recurring units (R2-a) of formula (1) and of recurring units (R2-a*), different from recurring units (R2-a), such as recurrings units of formula (2), (3) or (4) represented hereafter : 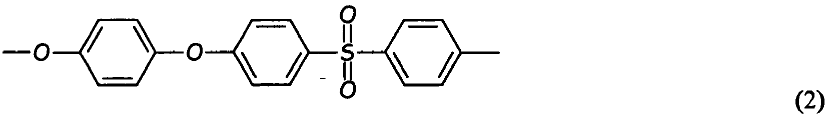 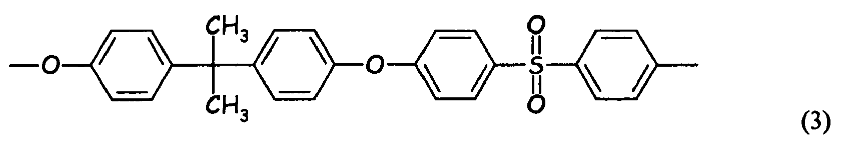 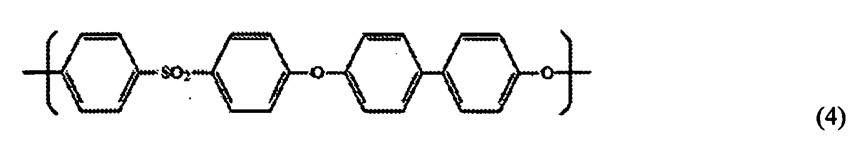 and mixtures thereof.

Preferably, the polyethersulfone is a homopolymer, or it is a copolymer the recurring units of which are a mix composed of recurring units (R2-a) of formula (1) and of recurring units (R2-a*) of formula (2), or it can also be a blend of the previously cited homopolymer and copolymer.

Polyethersulfones are commercially available notably from SOLVAY ADVANCED POLYMERS, L.L.C. as RADEL^{®} A.

In a certain embodiment of the present invention, the poly(aryl ether sulfone) (P2) is a polyetherethersulfone. To the purpose of the present invention, a polyetherethersulfone is intended to denote any polymer of which more than 50 wt. % of the recurring units are recurring units (R2-b) of formula (2)

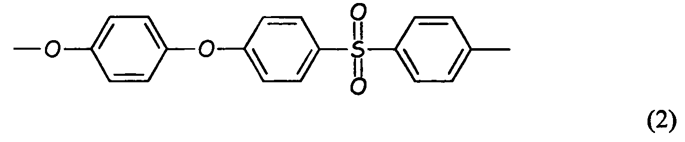

The polyetherethersulfone may be notably a homopolymer, or a copolymer such as a random or a block copolymer.

In a certain embodiment of the present invention, the poly(aryl ether sulfone) is a bisphenol A polysulfone. To the purpose of the present invention, a bisphenol A polysulfone is intended to denote any polymer of which more than 50 wt. % of the recurring units are recurring units (R2-c) of formula (3) :

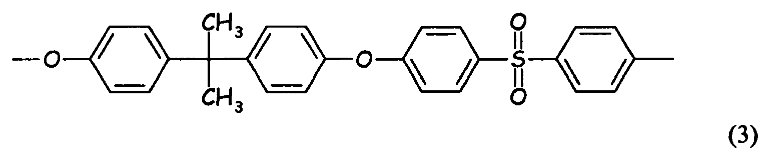

The bisphenol A polysulfone may comprise more than 75 wt. % or 90 wt. % of recurring units of formula (3). The bisphenol A polysulfone may be a homopolymer, or it may be a copolymer such as a random or a block copolymer. When the bisphenol A polysulfone is a copolymer, its recurring units are advantageously a mix of recurring units (R2-c) and of recurring units (R2-c*), different from recurring units (R2-c), such as : 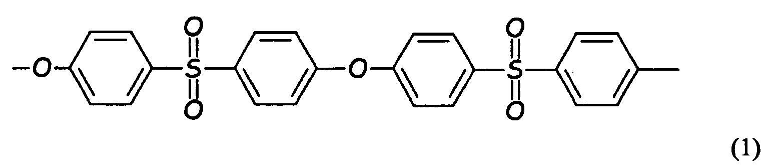 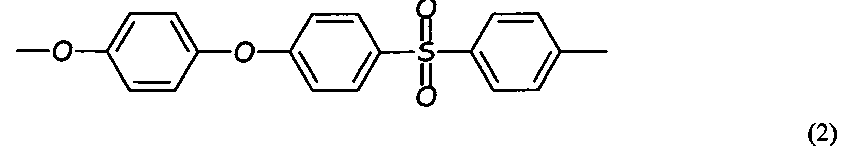 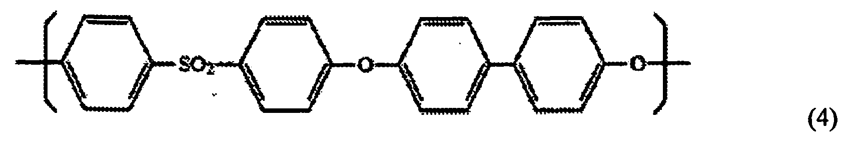 and mixtures thereof.

Preferably, the bisphenol A polysulfone is a homopolymer. Bisphenol A polysulfones are commercially available notably from SOLVAY ADVANCED POLYMERS, L.L.C. as UDEL^{®}.

The poly(aryl ether sulfone) (P2) is preferably a poly(biphenyl ether sulfone).

As described in the U.S. Provisional Application S.N. 60/835,430, the term "poly(biphenyl ether sulfone)" is intended to denote any polymer, generally a polycondensate, of which more than 50 wt. % of the recurring units are recurring units (R2-d) of one or more formulae containing at least one p-biphenylene group : 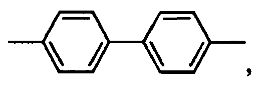 at least one ether group (-O-) and at least one sulfone group (-SO₂-).

Preferably, recurring units (R2-d) are recurring units of one or more formulae of the general type : 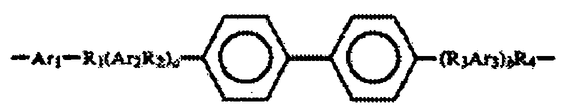 wherein R₁ through R₄ are -O-, -SO₂-, -S-, -CO-, with the proviso that least of R₁ through R₄ is -SO₂- and at least one of R₁ through R₄ is -O- ; Ar₁, Ar₂ and Ar₃ are arylene groups containing 6 to 24 carbon atoms, and are preferably phenylene or p-biphenylene; and a and b are either 0 or 1.

More preferably, recurring units (R2-d) are chosen from 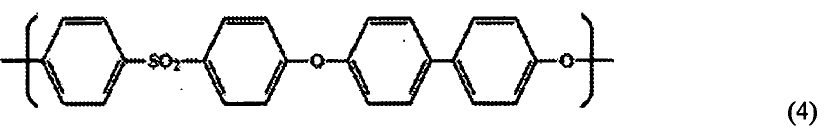 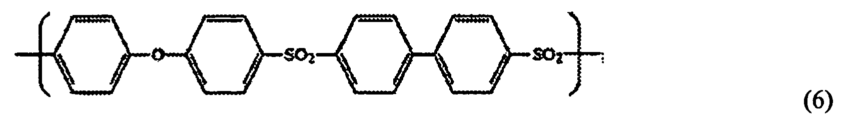 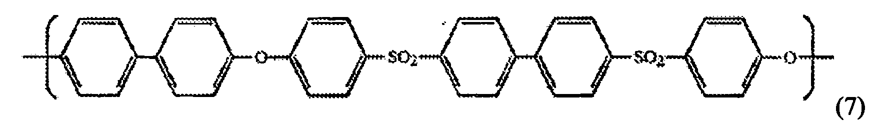 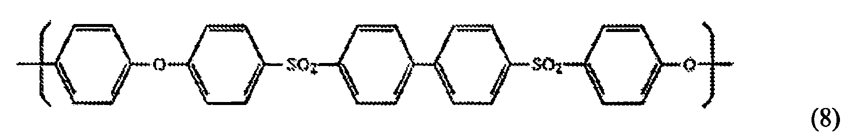 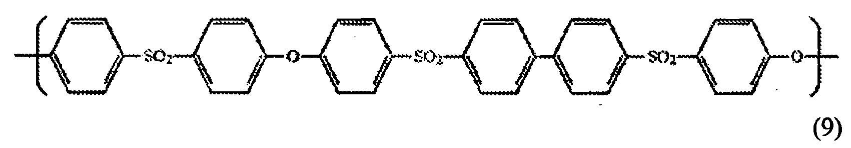 and mixtures thereof.

Still more preferably, recurring units (R2-d) are either 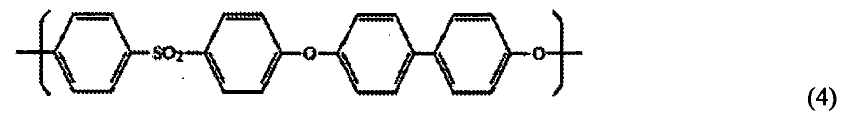 or 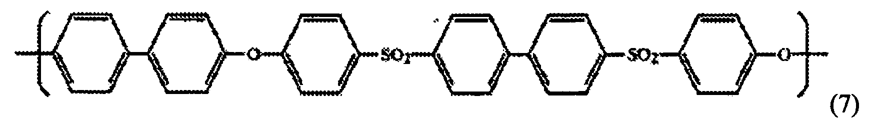 or a mix of 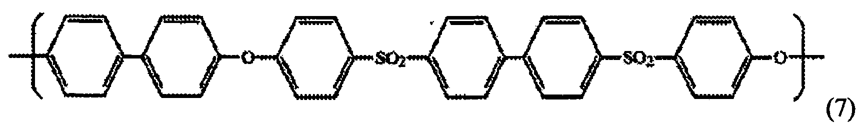 with 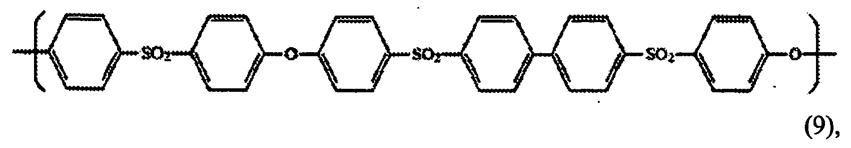 wherein the weight amount of the recurring units (9) contained in the mix, based on the total amount of the recurring units (7) and (9) of which the mix consists, is between 10 and 99 %, and preferably between 50 and 95 %.

The best properties may be achieved when using recurring units (7) or a mix of recurring units (7) and (9) as recurring units (R2-d). On the other hand, using recurring units (4) as recurring units (R2-d) provides in general the best overall cost-properties balance.

For the purpose of the present invention, a polyphenylsulfone is intended to denote any polycondensation polymer of which more than 50 wt. % of the recurring units are recurring units (R2-d) of formula (4).

The poly(biphenyl ether sulfone) may be notably a homopolymer, a random, alternating or block copolymer. When the poly(biphenyl ether sulfone) is a copolymer, its recurring units may notably be composed of (i) recurring units (R2-d) of at least two different formulae chosen from formulae (4), (6), (7), (8) or (9), or (ii) recurring units (R2-d) of one or more formulae chosen from formulae (4), (6), (7), (8) or (9) (especially, recurring units of formula (4)) and recurring units (R2-d*), different from recurring units (R2-d), such as : 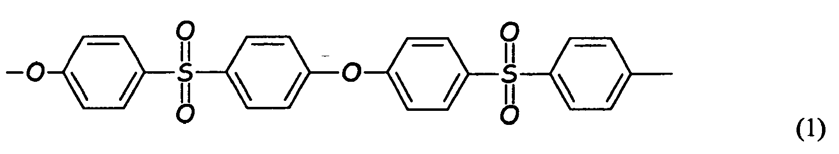 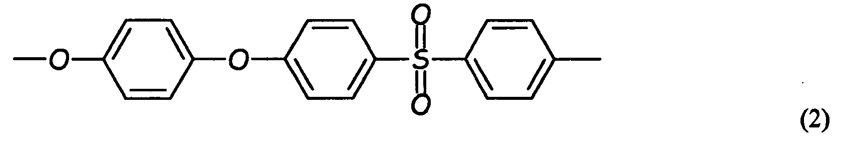 and

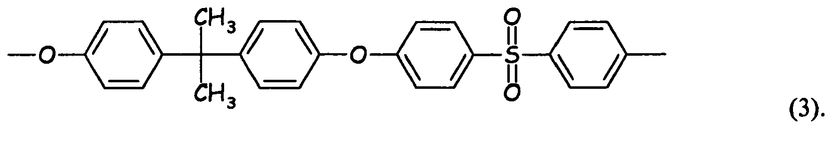

Preferably more than 70 wt. %, more preferably more than 85 wt. % of the recurring units of the poly(biphenyl ether sulfone) are recurring units (R2-d). Still more preferably, essentially all the recurring units of the poly(biphenyl ether sulfone) are recurring units (R2-d). The most preferably, all the recurring units of the poly(biphenyl ether sulfone) are recurring units (R2-d).

Excellent results were obtained when the poly(biphenyl ether sulfone) is a polyphenylsulfone homopolymer, i.e. a polymer of which essentially all, if not all, the recurring units are of formula (4). RADEL^{®} R polyphenylsulfone from SOLVAY ADVANCED POLYMERS, L.L.C. is an example of a polyphenylsulfone homopolymer.

### The blend (B12).

In a certain preferred embodiment, the polymer material (P) is a blend (B12). As previously mentioned, said blend (B12) is composed of at least one poly(aryl ether ketone) (P1) and at least one poly(aryl ether sulfone) (P2).

With respect to the blend (B12), the weight of the poly(aryl ether ketone) (P1), based on the total weight of the blend (B12) [i.e. based on the weight of the poly(aryl ether ketone) (P1) plus the weight of the poly(aryl ether sulfone) (P2)] is advantageously of at least 15 %, preferably at least 25 % , more preferably at least 35 %, still more preferably at least 40 %, and still still more preferably at least 45 % ; besides, the weight of the poly(aryl ether ketone) (P1), based on the total weight of the blend (B12) is advantageously of at most 90 % and preferably of at most 80 % ; in certain embodiments, it is of at most 70 %, and possibly of at most 55 % ; in certain other embodiments, it is above 55 %, and possibly of at least 60 %, at least 70 %, at least 75 % or even at least 80 %.

### The polymer (P3).

The polymer (P3) comprises sulfone groups, ketone groups and arylene groups.

In the polymer (P3), the number of moles of sulfone groups over the number of moles of ketone groups ratio may vary to a large extent.

Certain polymers suitable for use as the polymer (P3) are described in US provisional application 61/014,485, the whole content of which is herein incorporated by reference. Accordingly, the polymer (P3) may be a polymer comprising sulfone groups, ketone groups and polyarylene groups (with "polyarylene groups" as defined below), wherein the number of moles of sulfone groups over the number of moles of ketone groups ratio is greater than 1 ; in said particular polymer (P3), the number of moles of sulfone groups over the number of moles of ketone groups ratio may be greater than 1.25, greater than 1.5, or even greater than 2 ; besides, the number of moles of sulfone groups over the number of moles of ketone groups ratio may be notably below 5, below 4, below 3 or below 2.

Certain polymers other than those described in US provisional application 61/014,485 are also at least suitable, if not more suitable, for use as the polymer (P3). Accordingly, the polymer (P3) may be a polymer comprising sulfone groups, ketone groups and polyarylene groups, wherein the number of moles of sulfone groups over the number of moles of ketone groups ratio is of at most 1 ; besides, in the polymer (P3), the number of moles of sulfone groups over the number of moles of ketone groups ratio may be below 0.8, below 0.65, below 0.5, below 0.35 or even below 0.25 ; besides, the number of moles of sulfone groups over the number of moles of ketone groups ratio may be notably above 0.1, above 0.2, above 0.25, or up to 0.5.

Still other polymers suitable for use as the polymer (P3) are polymers comprising sulfone groups, ketone groups and arylene groups other than polyarylene groups. When the polymer (P3) is of such type, the number of moles of sulfone groups over the number of moles of ketone groups ratio may be either above 1 or of at most 1, and may comply with any of the above specified lower and upper limits.

The polymer (P3) comprises preferably polyarylene groups. The term "polyarylene groups" is intended to denote groups containing multiple benzenic ring structures, each benzenic ring being joined directly by at least one single bond to at least one other benzenic ring. Non limitative examples of such polyarylene groups include 2,6-naphthylene, 2,6-anthrylene, 2,7-phenanthrylene, biphenylene, and binaphthylenes. More preferably, the polymer (P3) comprises biphenylene groups. Still more preferably, the polymer (P3) comprises p-biphenylene groups.

The ketone groups of the polymer (P3) usually originate from ketone containing monomers. Non limitative examples of such ketone containing monomers include: 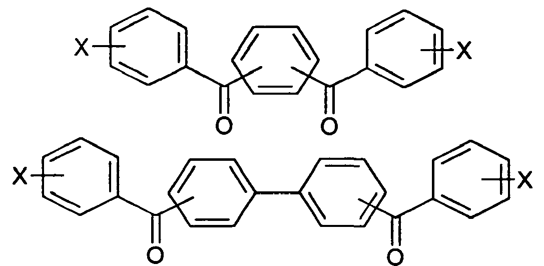 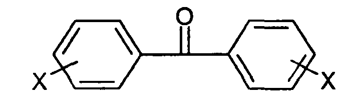 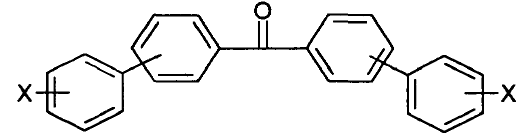 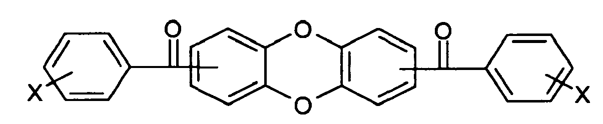 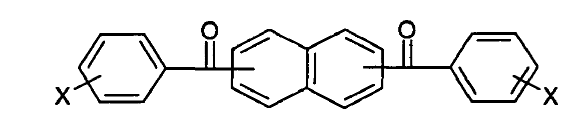 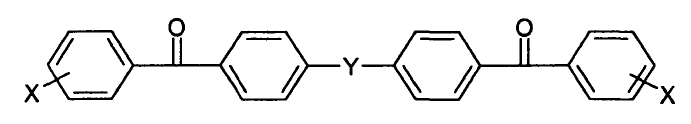 where X is a halogen, a nitro, a hydroxyl or a thiol group, and where Y is an alkyl, an aryl, a ketone, an -O-, or a -S- group.

The sulfone groups of the polymer (P3) usually originate from sulfone containing monomers. Non limitative examples of such sulfone containing monomers include: 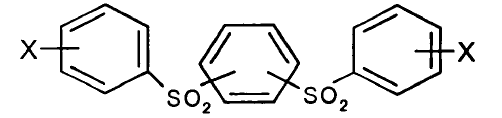 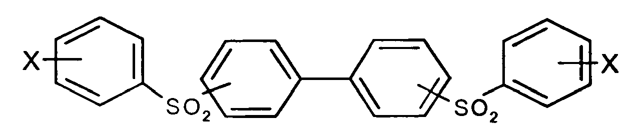 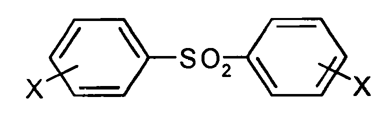 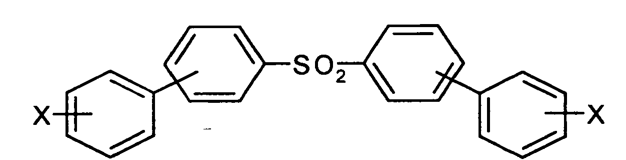 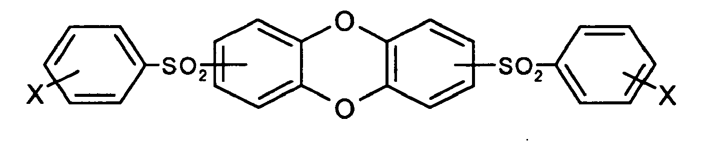 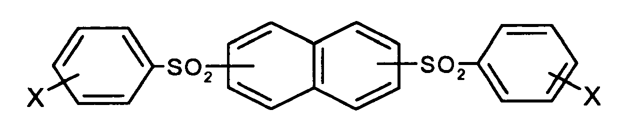 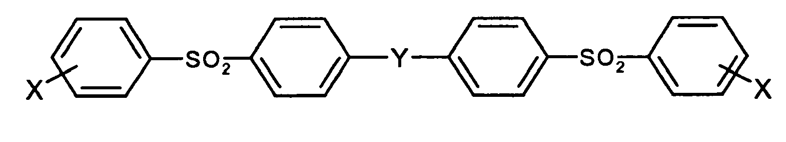 here X is a halogen, a nitro, a hydroxyl or a thiol group, and where Y is an alkyl, an aryl, a ketone, an -O-, or a -S- group.

The polymer (P3) comprises generally:
- at least one 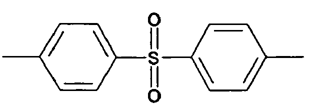 group (G1) and
- at least one 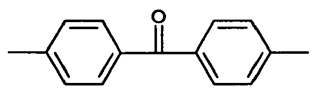 group (G2).

The polymer (P3) preferably further comprises at least 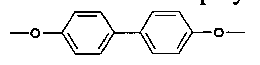 group (G3).

As it is the case for certain polymers described in US provisional application 61/014,485 suitable for use as the polymer (P3), the number of moles of (G1) over the number of moles of (G2) ratio may be greater than 1, greater than 1.25, more preferably greater than 2 ; on the other hand, it may be notably lower than 15, or lower than 10. As it is also the case for certain polymers described in US provisional application 61/014,485 suitable for use as the polymer (P3), the polymer (P3) may comprise more than 100 g, more than 200 g, more than 300 g or more than 350 g of groups (G1) per kg of polymer ; and the polymer (P3) may comprise more than 25 g, more than 75 g or more than 100 g of groups (G2) per kg of polymer ; and the polymer (P3) may also comprise more than 100 g, more than 200 g, more than 250 g or more than 300 g of groups (G3) per kg of polymer.

Certain polymers other than those described in US provisional application 61/014,485 are also at least suitable, if not more suitable, for use as the polymer (P3). Accordingly, in the polymer (P3), the number of moles of (G1) over the number of moles of (G2) ratio may be of at most 1 ; besides, in the polymer (P3), the number of moles of (G1) over the number of moles of (G2) ratio may be below 0.8, below 0.65, below 0.5, below 0.35 or even below 0.25 ; besides, the number of moles of (G1) over the number of moles of (G2) ratio may be notably above 0.1, above 0.2, above 0.25, or up to 0.5. Also accordingly, the polymer (P3) may comprise more than 25 g, more than 50 g, more than 75 g or more than 100 g of groups (G1) per kg of polymer ; and the polymer (P3) may comprise more than 100 g, more than 200 g, more than 250 g, more than 300 g or more than 350 g of groups (G2) per kg of polymer ; and the polymer (P3) may also comprise more than 100 g, more than 200 g, more than 250 g or more than 300 g of groups (G3) per kg of polymer.

The polymer (P3) may be a homopolymer or a copolymer. It is preferably a copolymer comprising recurring units of at least two distinct formulae. More preferably, it comprises recurring units of two and only two distinct formulae. The polymer (P3) may comprise recurring units (R3-a), (R3-b), (R3-c), (R3-d), (R3-e) or (R3-f) as detailed below. Recurring units (R3-a), (R3-b), (R3-c), (R3-d), (R3-e) and (R3-f) are obtainable by the reaction between different monomers, as will be detailed below ; by the way, said recurring units are, from a practical point of view, generally obtained by said reactions.

### Recurring units (R3-a).

Recurring units (R3-a) are obtainable by the reaction between at least one aromatic dihalo compound (D1-1) comprising at least one group (G1), and at least one aromatic dihydroxy compound.

Recurring units (R3-a) comprise at least one group (G1), but they may also comprise groups (G2) and/or (G3). They may also be free of groups (G2) and (G3). Excellent results were obtained with recurring units (A) comprising groups (G1) and (G2) or (G3).

The aromatic dihalo compound (D1-1) comprising at least one group (G1) of recurring units (R1) is preferably a 4,4'-dihalodiphenylsulfone or 4,4'-bis[(4-chlorophenyl)sulfonyl]-1,1'-biphenyl. More preferably, it is a 4,4'-dihalodiphenylsulfone. Still more preferably the 4,4'-dihalodiphenylsulfone is selected from the group consisting of 4,4'-dichlorodiphenylsulfone, 4,4'-difluorodiphenylsulfone and mixtures thereof.

The aromatic dihydroxy compound of recurring units (R3-a) is preferably 4,4'-biphenol or 4,4'-dihydroxybenzophenone.

### Recurring units (R3-b).

The polymer as above described may further comprise recurring units (R3-b) obtainable by the reaction between at least one aromatic dihydroxy compound (D1-2) comprising at least one group (G1), and at least one aromatic dihalo compound.

Recurring units (R3-b) comprise at least one group (G2), but it may also comprise groups (G1) and/or (G3). It may also be free of groups (G1) and (G3). Excellent results were for example obtained with recurring units (R1) comprising both groups (G2) and (G1).

The aromatic dihydroxy compound (D1-2) comprising at least one group (G1) of recurring units (R3-b) is preferably dihydroxydiphenylsulfone.

### Recurring units (R3-c).

The polymer as above described may further comprise recurring units (R3-c) obtainable by the reaction between at least one aromatic dihalo compound (D2-1) comprising at least group (G2) and at least one aromatic dihydroxy compound.

Recurring units (R3-c) comprise at least one group (G2), but it may also comprise groups (G1) and/or (G3). It may also be free of groups (G1) and (G3). Excellent results were for example obtained with recurring units (R3) comprising both groups (G2) and (G1).

The aromatic dihydroxy compound of recurring units (R3-c) is preferably 4,4'-biphenol.

The aromatic dihalo compound (D2-1) is preferably a 4,4'-dihalobenzophenone. More preferably, the 4,4'-dihalobenzophenone is selected from the group consisting of 4,4'-dichlorobenzophenone, 4,4'-difluorobenzophenone and mixtures thereof.

### Recurring units (R3-d).

The polymer as above described may further comprise recurring units (R3-d) obtainable by the reaction between at least one aromatic dihydroxy compound (D2-2), comprising at least group (G2) and at least one aromatic dihalo compound.

Recurring units (R3-d) comprise at least one group (G2), but it may also comprise groups (G1) and/or (G3). It may also be free of groups (G1) and (G3). Excellent results were for example obtained with recurring units (R4) comprising both groups (G2) and (G1).

The aromatic dihydroxy compound (D2-2) of recurring units (R3-d) is preferably 4,4'-dihydroxybenzophenone.

### Recurring units (R3-e).

The polymer as above described may further comprise recurring units (R3-e) obtainable by the reaction between at least one aromatic dihalo compound (D3-1), comprising at least group (G3) and at least one aromatic dihydroxy compound.

Recurring units (R3-e) comprise at least one group (G3), but it may also comprise groups (G1) and/or (G2). It may also be free of groups (G1) and (G2). Excellent results were for example obtained with recurring units (R5) comprising both groups (G3) and (G1).

The aromatic dihydroxy compound of recurring units (R3-e) is preferably 4,4'-biphenol.

### Recurring units (R3-f).

The polymer as above described may further comprise recurring units (R3-f) obtainable by the reaction between at least one aromatic dihydroxy compound (D3-2), comprising at least group (G3) and at least one aromatic dihalo compound.

Recurring units (R3-f) comprise at least one group (G3), but it may also comprise groups (G1) and/or (G2). It may also be free of groups (G1) and (G2). Excellent results were for example obtained with recurring units (R3-f) comprising both groups (G3) and (G1).

The aromatic dihydroxy compound (D3-2) of recurring units (R3-f) is preferably 4,4'-biphenol.

In a particular embodiment, the polymer (P3) is preferably free of hydroquinone groups.

Recurring units (R3-a), (R3-b), (R3-c), (R3-d), (R3-e) and (R3-f) may be the same or different. For example, a recurring unit comprising both groups (G1) and (G2) falls under both definitions of recurring units (R3-a) and (R3-d).

Non limitative examples of such recurring units as above described are listed below:

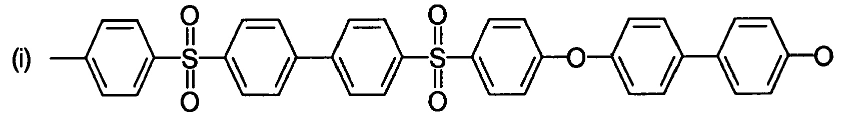

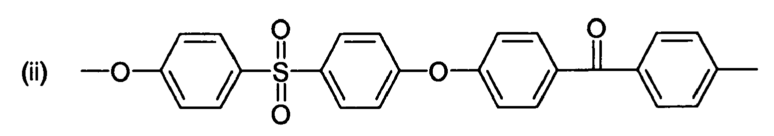

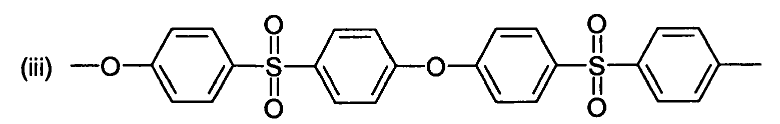

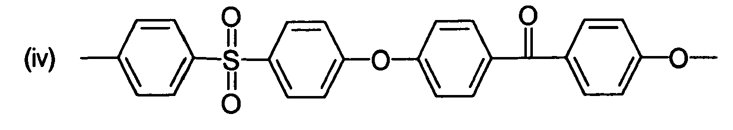

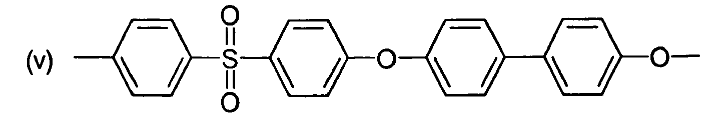

Recurring unit (i) is an example of recurring units that is at the same time recurring units (R3-a) and (R3-f). Recurring unit (ii) to (v) are respectively at the same time recurring units (R3-b) and (R3-c), (R3-a) and (R3-b), (R3-a) and (R3-d), and finally (R3-a) and (R3-f).

The total weight of recurring units (R3-a), (R3-b), (R3-c), (R3-d), (R3-e) and (R3-f) over the total weight of the polymer ratio is advantageously above 0.5. This ratio is preferably above 0.7, more preferably above 0.9 and still more preferably above 0.95. The most preferably, the polymer (P3) comprises no other recurring unit than recurring units (R3-a), (R3-b), (R3-c), (R3-d), (R3-e) and (R3-f).

Excellent results were obtained with the polymers comprising the following structures: 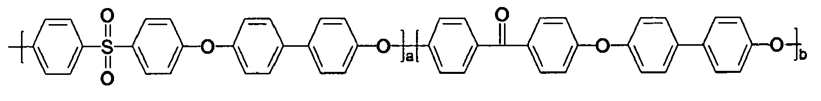 or 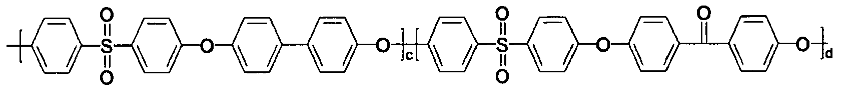 wherein :
■ "a" may represent at least 10 mol. %, 20 mol. %, 30 mol. %, 40 mol. %, 50 mol. % of the whole polymer, and "a" may also represent at most 70 mol. %, 60 mol. %, 50 mol. %, 40 mol. %, 30 mol. % of the whole polymer ; "a" represents preferably from 10 mol. % to 60 mol. % of the whole polymer ;
■ "b" may represent at least 30 mol. %, 40 mol. %, 50 mol. %, 60 mol. %, 70 mol. % of the whole polymer, and "b" may also represent at most 95 mol. %, 90 mol. % or 80 mol. % of the whole polymer ; "b" represents preferably from 40 mol. % to 90 mol. % of the whole polymer ;
■ "c" may represent at least 10 mol. %, 20 mol. %, 30 mol. %, 40 mol. %, 50 mol. % of the whole polymer, and "c" may also represent at most 70 mol. %, 60 mol. %, 50 mol. %, 40 mol. %, 30 mol. % of the whole polymer ; "c" represents preferably from 10 mol. % to 60 mol. % of the whole polymer ;
■ "d" may represent at least 30 mol. %, 40 mol. %, 50 mol. %, 60 mol. %, 70 mol. % of the whole polymer, and "d" may also represent at most 95 mol. %, 90 mol. % or 80 mol. % of the whole polymer ; "d" represents preferably from 40 mol. % to 90 mol. % of the whole polymer.

As it is the case for certain copolymers described in US provisional application 61/014,485 which are suitable for use as the polymer (P3), "a" and "c" may also represent between 75 to 90 mol.% of the whole polymer, and "b" and "d" may represent between 10 to 25 mol. % of the whole polymer.

### The blends (B123).

The polymer material (P) may be a blend (B123) composed of at least one poly(aryl ether ketone) (P1), at least one poly(aryl ether sulfone) and at least one polymer (P3) as previously defined.

With respect to blend (B123), the weight of the poly(aryl ether ketone) (P1), based on the combined weight of the poly(aryl ether ketone) (P1) and the poly(aryl ether sulfone) (P2), is advantageously of at least 15 %, preferably at least 25 % , more preferably at least 35 %, still more preferably at least 40 %, and most preferably at least 45 % ; besides, the weight of the poly(aryl ether ketone) (P1), based on the combined weight of the poly(aryl ether ketone) (P1) and the poly(aryl ether sulfone) (P2), is advantageously of at most 90 %, preferably at most 80 %, and still more preferably at most 70 %. On the other hand, the weight of the polymer (P3), based on the total weight of the blend (B123) [i.e. the weight of the poly(aryl ether ketone) (P1) plus the weight of the poly(aryl ether sulfone) (P2) plus the weight of the poly(aryl ether ketone) (P3)] may vary to a large extent; it may of at least 20 %, 40 %, 60 % or 80 %, based on the total weight of the blend (B123) ; it may further be of at most 80 %, 60 %, 40 % or 20 %, based on the total weight of the blend (B123).

### Description of the methods and systems for making fibers

The fibers (F) may be obtained by a melt-spin process. In such a method, pellets (or a powder) of polymer materials (P) can be pre-dried. The pellets are then fed into an extruder. The extruded polymer material (P) is melted and the melted polymer material (P) is passed through die holes. The strands of fibers can be pulled from the die holes using for example a series of rollers. The pulled strands can then be rolled on a reel. The viscosity, strength and extensibility of the strands can be controlled by varying different parameters, such as the level of additives in the polymer material (P), the polymer molecular weight, molecular weight distribution and molecular architecture. These flow parameters can also be controlled by temperature and shear conditions, such as the speed of pull by the rollers.

The melt-spin process works particularly well for resins that can be readily melt processed in general, and will lend themselves to melt spinning. Preferably, polymer materials (P) that are melt-spun are relatively clean (free of contaminants such as gels, black specs, char, etc). For example, bisphenol A polysulfones such as UDEL^{®}, polyethersulfones such as RADEL^{®} A, polyphenylsulfones such as RADEL^{®} R, ACUDEL^{®}, polymer materials such as AVASPIRE^{®}, polyetheretherketones such as KETASPIRE^{®}, poly(biphenyl ether sulfone)s such as EPISPIRE^{®}, polyetheretherketones such as GATONE^{®} and poly(aryl ether sulfone)s such as GAFONE^{®} can be melt-spun.

A system for manufacturing the fibers (F) can include an extruder, for example a 1.5" diameter extruder. The extruder can feed two melt pumps, each feeding a die with clusters of die holes. For example, each melt pump can feed two clusters of 20 die holes, each 0.8 mm in diameter. The strands of fibers can be pulled by a set of rollers. The pulling linear velocity of the initial set of rollers can be for example about 600 m/min. Successive sets of rollers can further pull the strand, for example by increasing the pulling linear velocity for each successive set of rollers. For example, the forth set of rollers can have a pulling linear velocity of about 900 m/min. The pulled strands can then be rolled on a high speed reel.

The fibers (F) are not limited to the above method and system. For example, it is possible to manufacture the fibers (F) using a solvent to dissolve the polymer material (P) before spinning. This solvent-based method provides the advantage of not requiring elevated temperature to melt the polymer material (P). This method may be well suited for polymer materials (P) that are relatively difficult to handle and/or that react to heat. A surface active fiber, i.e., providing active chemistry on its surface, might be produced through solution spinning. For example, fiber including a hydroxyl, amine, siloxane etc type of active group can be manufactured with a solution spinning method. In addition, if a second material, such as an additive, cannot withstand the melt temperatures of the first material, solution spinning can be used to manufacture a fiber including both materials. On the other hand, the melt-spinning method provides a fluid polymer material (P) without the use of a solvent, which can be beneficial because solvents can require additional steps in order to comply with environmental concerns.

The fibers (F) can also be made using a spun-bond process. Spun-bonded fabrics are non-woven fabrics formed by filaments which have been extruded drawn, and then laid down on a continuous belt. Bonding can be accomplished by several methods such as hot-calendering or by passing the web through a saturated steam chamber at elevated temperature. A spun fabric is a fabric made from staple fibers which may contain one or a mixture of two or more fiber types. A spun-laced fabric is a non-woven fabric produced by entangling fibers in a repeating pattern to form a strong fabric free of binders. A staple can be made up of natural fibers or cut lengths of fiber from filaments. The staple length can vary from less than one inch to several feet. Man-made staple fibers can be cut to a definite length so that they can be processed in spinning systems. The term staple is used in the textile industry to distinguish cut fiber from filaments. Melt blown can be thought of as molten resin forced thru small orifices and 'blown' down onto a substrate or conveyor belt. This can be done in a random way making a non-woven or felt-like swatch of material.

The fibers (F) can have any number of profiles, including but not limited to lobes, stripes, segments, etc. The fibers (F) can also be made with one or multiple resins. For example, one resin can form the core of the fiber and another resin can form the shell of the fiber. The fibers (F) can produce fibers within a very broad range in diameter, with a number average diameter generally from as low as 1 nm to as high as 100 µm. The fibers (F) may be notably nanofibers, i.e. fibers the number average diameter of which is below 1 µm (1000 nm) ; nanofibers may have a number average diameter of at least 2, 5, 10, 20, 50, 100 or 200 nm ; nanofibers may have a number average diameter of at most 500, 200, 100, 50, 20 or 10 nm. The fibers (F) may also be microfibers, i.e. fibers the number average diameter of which is of at least 1 µm (1000 nm) ; microfibers may have a number average diameter of at least 2, 4, 8 or 12 µm microfibers may have a number average diameter of at most 50, 30 or 20 µm. In certain embodiments, preferred fibers have a number average diameter ranging from 12 to 20 µm. The number average length of the fibers (F) is advantageously of at least 10 cm, preferably of at least 25 mm and more preferably of at least 50 mm. Fibers with a number average length of at least 50 mm have good filtration efficiency. The number average length of the fibers (F) is not particularly restricted. It can be of at most 100, 200 or 500 mm, but it can also be much higher as it is the case with continuous fibers. Still other diameters and lengths are possible.

With a two component system, many (often, at least 100) strands (e.g., 600) of one polymer material (P) can be formed in a matrix of a polymer material (P2) different from polymer material (P), all totaling a few microns in number average diameter (often, at least 2.0 µm), e.g., 10 µm. Such a technique is sometimes referred to as the "islands in the sea" technique. If the matrix polymer material (P2) is washed away (e.g. it is dissolved by a solvent), one can obtain as many nanofibers as the number of strands formed in the matrix (here, 600 nanofibers).

Generally, the fibers (F) can have diameters from nanometers to millimeters and can be very short to reels in length. A fiber is a unit of material which forms the basic element of fabrics or textile structures. The fibers (F) can have a number average length at least 10, 100, 1,000 or, in certain instances, even 10,000 times its number average diameter.

Further, the fibers (F) can have different cross-sectional profiles, such as circular, oval, star-like, core/shell, etc. The Applicant is of the opinion that, in certain embodiments of the present invention, non-circular fiber profiles of the fibers, in particular the star-like profile, are preferred, because they provide enhanced filtration capabilities.

In addition, the fibers (F) can have a waviness (or crimps per unit length) taking different values, for example, 11-12 crimps/inch. Other crimp values are possible.

### Description of the filter assemblies incorporating the fibers

The fabric comprising a plurality of fibers (F) discussed above provide benefits for numerous applications. These applications include, but are not limited to, filter assemblies, dust collectors, pollution control systems, mist eliminator blades or baffles, for example within an absorber tower. Another aspect of the present invention is thus related to a filter assembly comprising a frame and a fabric mounted on said frame, wherein said fabric is the fabric according to the present invention.

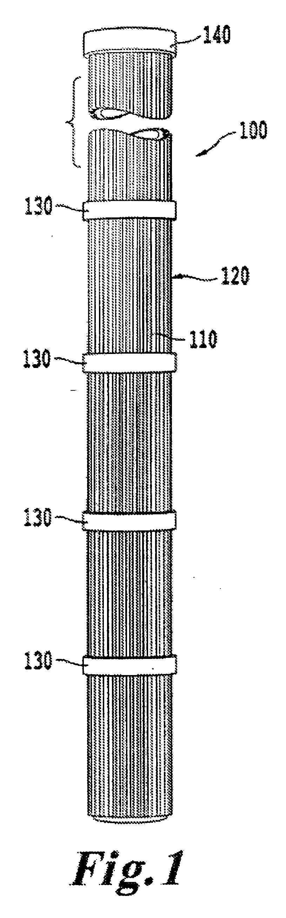

Figure 1 is a diagram illustrating a non-limiting embodiment of a filter assembly 100 according to the present invention including fibers 110. As seen in Fig. 1, the filter assembly 100 includes a filtering fabric (typically, a bag) made of fibers 110. The filtering fabric can be felt, or non-woven, fabric, as well as woven fabric, made from the fibers 110. In a preferred embodiment, the filtering fabric 120 incorporates fibers 110 comprising a blend (B12) as above defined, such an AVASPIRE^{®} polymer blend. In another preferred embodiment, the filtering fabric 120 incorporates fibers 110 comprising a polymer (P3) as previously defined. In yet another preferred embodiment, the filtering fabric 120 is free of any polymer material different from the polymer material (P), such as poly(phenylene sulphide).

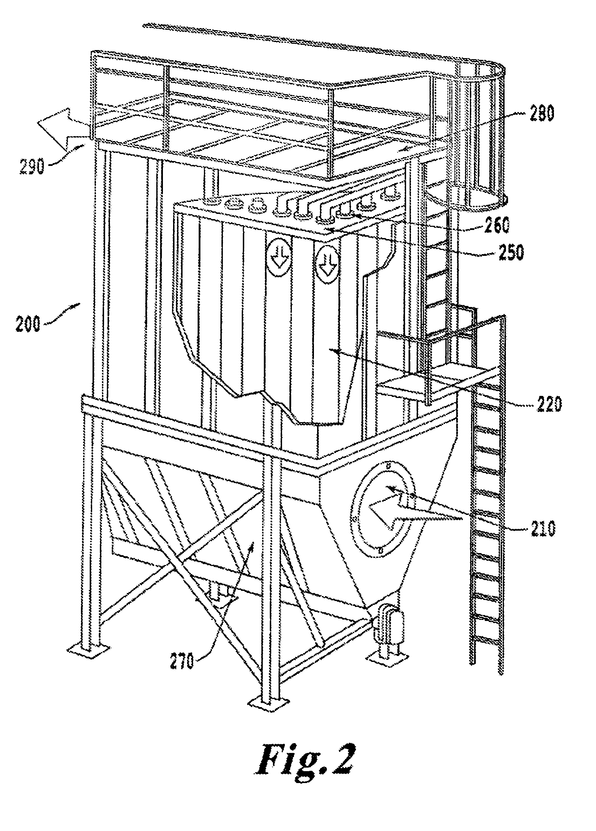

The filter assembly 100 can filter particulates from a particulate laden gas as the gas passes through each filter assembly 100. Each filter assembly 100 can be supported at its upper end by a flange 140 coupled to a tube sheet 250 of the filtration system 200 (Fig. 2) and can hang downwardly in a substantially vertical direction. The flange 140 can bear the weight of the filter assembly 100 when attached to the tube sheet 250. The flange is made from a suitable material, such as stamped, drawn or otherwise formed metal.

The length of the filter assembly 100 can vary, for example from a few centimeters to a few meters. Also, the filter assemblies 100 can be connected in series. For example, the filter assemblies 100 can be modules of a filtration system made of several filter assemblies. The filter assembly 100 is preferably open on both ends. Alternatively, the filter assembly 100 can be closed at one or both ends. The filter assembly 100 can have any suitable configuration cross-section, such as for example circular, oval or square.

The filtering fabric 120 can be mounted on a frame 130 configured to support the filtering fabric 120 in a radial direction. The frame 130 can include support rings sewn into the filtering fabric 120. Alternatively, or in addition, the frame 130 can include a support cage or a perforated tube on which the filtering fabric 120 is mounted. The support rings 130 and/or the support cage and/or the tube can be made of metal, perforated sheet metal, expanded metal or mesh screen, or other suitable materials. The support rings, tube and/or cage can be coupled to the flange 140.

The filtering fabric 120 can be formed in a substantially tubular shape. Preferably, the filtering fabric 120 includes a pleaded element with accordion folds at its inner and outer peripheries. The filtering fabric 120 can be attached to the flange and/or support rings/cage/tube, for example via a potting material.

The filter assembly 100 can be incorporated, for example, in a filtration system, or baghouse, of any manufacturing or production plant that needs to control and/or clean its emission, such as a coal-fired power generation plant or a cement plant. In that respect, the filter assembly 100 can profitably replace the presently used filter assemblies comprising poly(phenylene sulphide) fibers. The fibers 110 according to the present invention can thus provide an alternative and more technically performing source of polymer fibers to address the limited supply of conventional polymer fibers (especially PPS fibers) used in industrial filter assemblies, which further need to be periodically replaced. The fibers 110 can also provide a filter assembly 100 that can sustain high operating temperatures and acidic environments.

As discussed above, the fibers 110 are made out of the above mentioned polymer material (P). Fibers 110 have such chemical compositions that they have good oxidative stability, resistance to hydrolysis and to various chemicals. Thus, in extreme environments of high temperature and/or acidic and/or basic atmosphere, the filter assembly 100 according to the present invention can offer a number of benefits for industrial filter assemblies. In particular, fibers 110 do not breakdown oxidatively, and thus improve the longevity of the filter assembly 100, which does not clog up as quickly and need not be replaced as frequently. The filter assembly 100 can operate at higher temperatures, thus providing improved operational efficiencies of the overall unit. The filter assembly 100 can be operated through more shaker cycles thereby extending the filter assembly life. Further, the physical attributes of the fibers 110 provide new and improved design options allowing for even further filtration improvements. The filter assembly according to the present invention preferably comprises fibers that do not breakdown oxidatively in the presence of sulfuric acid or in a temperature environment of around 375°F. In certain embodiments, it also comprises surface active fibers.

### Description of the filtration system incorporating the filter assemblies

The filtration system according to the present invention comprises a plurality of filter assemblies, at least one of them being the filter assembly as above described. In a certain embodiment, the filtration system according to the present invention comprises a plurality of filter assemblies, each of them being the filter assembly as above described.

The filtration system according to the present invention may further comprise a gas inlet configured to receive a gas from a coal burning power generation plant or a cement plant. In a certain embodiment, the filtration system according to the present invention receives gas from a coal burning power generation plant or a cement plant.

Figure 2 is a diagram illustrating a filtration system according to the present invention (or scrubber system, or baghouse) 200 including filter assemblies 100 with fibers 110. This filtration system 200 can be incorporated in a coal-burning power generation plant or in a processing plant, such as a rock and/or cement plants ad steel and/or coke mills. The filtration system 200 includes a gas inlet 210, in which flu gas to be filtered is inserted. The gas is then passed through multiple filter assemblies (or filter bags) 220. Each of the filter assemblies 220 can be similar to the filter assemblies 100 with filtering fabric 120 shown in Fig. 1, but other configurations are possible. The filter assemblies 220 include a fabric made of fibers 110 made according to the present invention. The filter assemblies 220 can be attached to the tube sheet 250 via their flanges. The filter assemblies 220 can hang vertically inside the unit and can be held in place by clamps, snapbands or hold-downs. The filter assemblies 220 can trap various components from the gas, including SO₂, SO₃, CO₂, mercury, nitrogen dioxide, and other pollution molecules and combustion residues. The filter assemblies 220 can trap these components mechanically and/or chemically, for example via a surface active fiber. The filtered gas then exits the filtration system 200 via gas outlet 290.

The filter assemblies 220 can function in a high temperature environment, for example around 375°F, and in an acidic environment (e.g., in the presence of sulfuric acid) for an extended amount of time (e.g., three or more years). During this time, the filter assemblies 220 can be regularly cleaned, or discharged of debris, via some type of agitation system, such as a pulse jet, a shaker system, reverse air or some mixture thereof. For example, the filtration system 200 can include a pulse jet system 260 configured to generate a blast of compressed air, which is injected into the top of the opening of the filter assemblies 220. The air can be supplied from a blowpipe which feeds into venturies located above the filter assembly. The air blast creates a shock wave that causes the bag to flex and particulate to release into a hopper 270 below. Because of the accumulation of debris over time, the agitation of the filter assemblies, and the rough environment, the filter assemblies 220 age and eventually need to be replaced. The filter assemblies can be serviced and replaced via top access hatches 280.

A filtration system 200 can include thousands of such filter assemblies 220. For example, in an electric utility plant, a filtration system 200 can include 10,000 filter assemblies 220, representing thousands of pounds of fibers. Thus, when the filters clog up and need to be replaced, the cost of such replacement can be great. This is another reason why increasing the longevity of the filters can be particularly beneficial in these applications, and why the fibers of the present inventions can lead to significant cost efficiencies.

### EXAMPLES

### Samples.

Three raw materials, namely high melt flow VICTREX^{®} 150P PEEK (powder form, referred to as PEEK 150), medium melt flow VICTREX^{®}381G PEEK (pellets, melt filtered, referred to as PEEK 381) and RADEL^{®} R 5100 NT medium flow PPSU (pellets, melt filtered), have been used for preparing various polyetheretherketone (hereinafter, PEEK) / polyphenylsulfone (hereinafter, PPSU) blends as listed in table 1. In addition to controls CE1 and CE2, a total of 3 blends were compounded with the formulations E1, E2 and E3, listed in Table 1. Each formulation was dry-blended and extruded.

**Table 1: formulations**

| | **CE1** | **CE2** | **CE3** | **E1** | **E2** | **E3** |
|---|---|---|---|---|---|---|
| PEEK 381 (wt. %) | 0 | 100 | 0 | 0 | 60 | 70 |
| PEEK 150 (wt. %) | 100 | 0 | 0 | 82 | 0 | 0 |
| RADEL^{®} R 5100 NT medium flow PPSU (wt. %) | 0 | 0 | 100 | 18 | 40 | 30 |

### Compounding conditions

The PEEK/PPSU blends were compounded using a Berstorff B 25 mm extruder using a 20/40/60/230 mesh screen pack in the die plate. Details on the conditions are shown in Table 2. The material output was targeted at 18∼20 lb/hr and the melt temperature was controlled to be below 405°C by optimizing the screw rpm and barrel temperatures. Pellets were obtained.

**Table 2: compounding conditions**

| | **CE1** | **CE2** | **E1** | **E2** | **E3** |
|---|---|---|---|---|---|
| Temperature set point is mentioned in brackets below | Effective temperature (in °C) | | | | |
| Barrel 2 (330°C) | 323 | 330 | 299 | 329 | 286 |
| Barrel 3 (330°C) | 328 | 330 | 329 | 333 | 319 |
| Barrel 4 (330°C) | 327 | 330 | 330 | 333 | 340 |
| Barrel 5 (340°C) | 338 | 341 | 340 | 340 | 325 |
| Barrel 6 (340°C) | 341 | 339 | 340 | 343 | 339 |
| Barrel 7 (350°C) | 351 | 346 | 350 | 345 | 339 |
| Barrel 8 (350°C) | 351 | 346 | 351 | 345 | 345 |
| Adapter (350°C) | 351 | 348 | 349 | 351 | 347 |
| Die (350°C) | 341 | 344 | 352 | 350 | 296 |
| Die pressure (psi) | 26 | 150 | 38 | 150 | 150 |
| Screw speed (rpm) | 200 | 175 | 200 | 175 | 175 |

### Fiber melt spinning processability comparison by Dynamic Melt Rheology.

The samples were characterized using a dynamic rheometer with parallel plates at 380°C. Compression-molded plaque samples from the so-obtained pellets were dried overnight in a vacuum oven at 160°C. Results are reported in Table 3 where η° is the zero shear melt viscosity in Pa.s. Sω indicates the melt viscosity sensitivity to shear rate (unitless). A greater Sω value indicates higher melt viscosity sensitivity to shear rate of the polymer.

Compared to neat CE2 (medium melt flow), the E2 and E3 material feature reduced shear thinning behavior, reduced zero shear viscosity (related to melt strength) and modified melt viscosity sensitivity to temperature. They thus appear to have a broad process window for fiber melt spinning and give less frequent strand breaks. The Applicant, who has acquired great expertise in the field of engineering polymers and their manufacturing, has experienced that polymer materials featuring η° values of lower than 3000 Pa.s, and Sω at 10 rad/s values of lower than 0.25 are especially well suited for the manufacture of fibers and fabrics.

**Table 3: dynamic rheological property at 380°C**

| | **E2** | **E3** | **CE2** |
|---|---|---|---|
| η°, Pa.s | 2021 | 2459 | 4030 |
| Sω at 10 rad/s | 0.18 | 0.21 | 0.30 |
| Sω at 100 rad/s | 0.31 | 0.35 | 0.43 |

### Melt Spinning.

Fiber spinning trial was conducted on a machine including a standard 1.5" single screw extruder with L/D of 24:1 and a compression ratio of 3:1, two melt pumps and four drawing rollers. The screw had feeding, transition and metering zones of 7.5/13.5/15 inch lengths without a mixer. Each melt pump fed the material into a spinneret having two clusters each of 20 holes of 0.8 mm in diameter for a total of 80 strands. The total material residence time was about 10 minutes at 5 lbs/hr output rate. The strands were pulled by the four rollers, whose speeds and temperature were controlled independently. The first roller drew the strands at the molten state of the polymer ("hot" draw). The strand drawing from rest of the rollers took place at a solid state of the polymer ("cold" drawing). Four screen packs of 325x60x20x20x20 mesh combination were used before the spinneret.

Fiber spinning conditions for the PEEK sample CE1 and the PEEK/PPSU sample E1 are shown in Table 4. The PEEK/PPSU blend E1 demonstrated better fiber melt spinning processability (or less strand breaks) over the neat PEEK sample CE1, at similar process conditions.

**Table 4: Fiber spinning conditions**

| | **CE1** | **E1** |
|---|---|---|
| *Extruder* | | |
| Rear, °C | 350 | 350 |
| Zone 2, °C | 370 | 385 |
| Zone 3, °C | 390 | 395 |
| Head, °C | 390 | 395 |
| Head pressure, psi | 1600 | 1660 |

| *Rollers* | | |
|---|---|---|
| 1^{st} roll, m/min - temperature, °C | 176-135 | 176 - 140 |
| 2^{nd} roll, m/min - temperature, °C | 388 - 200 | 756 - 200 |
| 3^{rd} roll, m/min - temperature, °C | 396 - 145 | 768 - 200 |
| Last roll, m/min - temperature, °C | 456 - 40 | 780-45 |
| Denier g/9000m | 338 | 355 |
| DPF, g/9000m | 4.2 | 4.4 |
| Fiber diameter, mm | 0.022 | 0.023 |

### Tensile Properties.

Tensile test for multifilament fibers was conducted following ASTM 2256. Fiber samples were conditioned at 23°C and 50% humidity for at least 24 hours. Starting position between the specimen grips was set at 250 mm and crosshead speed was 300 mm/min. Denier is a unit of measure for the linear mass density of fibers. It is defined as the mass in grams per 9,000 meters. One can distinguish between Filament and Total denier. Both are defined as above but the first only relates to a single filament of fiber (also commonly known as Denier per Filament or D.P.F) whereas the second relates to an agglomeration of filaments. The following relationship applies to straight, uniform filaments: D.P.F. = Total Denier / Quantity of Uniform Filaments

Properties reported from the tensile test include Tenacity, Modulus, and Toughness. Properties from the tensile test on PEEK (CE1), PPSU (CE3) and PEEK/PPSU (E1) fibers are shown in Table 5.

**Table 5: Fiber tensile properties**

| | **CE1** | **CE3** | **E1** |
|---|---|---|---|
| DPF, g/9000m | 4.2 | 6.1 | 4.4 |
| Tenacity, gf/den | 3.1 | 1.6 | 4.0 |
| Modulus, gf/den | 62 | 21 | 68 |
| Toughness, gf/den | 0.7 | 0.7 | 0.8 |

Sample E1 gave excellent results, compared to the neat PEEK and PPSU samples, featuring unexpectedly improved properties.

### Thermal Stability.

Thermal stability property, discussed in this study, is measured through % tenacity retention of a fiber sample after exposed in a hot air oven of 170°C for a prolong period. All fiber samples for this test were water-washed to remove the finish chemical prior to the oven exposure. Results are shown in Table 6.

**Table 6 : tensile properties upon thermal aging**

| | **CE1** | **E1** |
|---|---|---|
| **Initial fiber properties** | | |
| Tenacity, gf/den | 3.1 | 4.0 |

| **13 days** | | |
|---|---|---|
| Tenacity, gf/den | 2.1 | 4.1 |
| Tenacity retain, % | 65.9 | 101.9 |

| **62 days** | | |
|---|---|---|
| Tenacity, gf/den | 2.4 | 4.1 |
| Tenacity retain, % | 75.8 | 102.5 |

| **82 days** | | |
|---|---|---|
| Tenacity, gf/den | 2.4 | 3.7 |
| Tenacity retain, % | 76.0 | 91.7 |

The fibers, prepared from E1, do not show any noticed tenacity reduction after aging for ∼2000 hrs. The fibers, prepared from CE1, however, show significant tenacity reduction (- 30%) during the early stage of aging (< ∼300 hrs).

### Chemical Resistance.

Fiber chemical resistance was evaluated by immersing the fiber in a testing reagent for 24 hours and then determining tensile properties and in particular tenacity retention of the chemical treated fiber. Details of the test procedure are given in the following:
Fibers were winded on a 1" diameter glass tube (2/3 way down into the bottom) and rinsed for 1 minute to remove the finish and then dried the fiber with paper towel. Six tubes each loaded with different fiber samples were immersed into a glass 1000 ml wide-mouth jar filled with a chemical reagent. The jar was capped and left inside a hood at room temperature for 24 hours. The tubes were taken out from the jar, and rinsed with isopropanol (for organic reagents) or deionized water (for inorganic solutions) to rinse the remaining chemical reagent from the fiber for initial cleaning. The tubes were then dipped into an isopropanol or water bath as a second step clean up. The fibers were then conditioned for a day before running tensile tests.

Details of chemical resistant results are given in Table 7. The PPSU fibers (CE3) do not have good resistance to some organic solvents, but they show superior resistance to strong base and acid solutions at room temperature, and to intermediate concentrated base and acid solutions at an elevated temperature. The PEEK fibers (CE1) of high melt flow show inadequate resistance to either strong acids at room temperature or intermediate concentrated acids at an elevated temperature. The PEEK/PPSU fibers exhibit significantly improved chemical resistance to the organic solvents and to strong acids at room temperature or to intermediate concentrated acids at an elevated temperature vs. PPSU (CE3) and PEEK (CE1) fibers.

### Test temperature: 23°C

**Table 7: Tensile properties upon chemical treatment**

| **Material** | | **CE1** | **CE3** | **E1** |
|---|---|---|---|---|
| DPF | | 4.3 | 6.9 | 4.4 |
| **Acetone** | Tenacity, gf/den | 2.5 | dissolved | 4.4 |
| | Elongation, % | 39.1 | dissolved | 30.3 |
| | Modulus, gf/den | 54.2 | dissolved | 77.5 |
| | Toughness, gf/den | 0.5 | dissolved | 0.9 |
| | Tenacity retention, % | 80 | dissolved | 109 |
| **MEK** | Tenacity, gf/den | 2.8 | dissolved | 4.3 |
| | Elongation, % | 32.5 | dissolved | 29.5 |
| | Modulus, gf/den | 49.9 | dissolved | 73.7 |
| | Toughness, gf/den | 0.6 | dissolved | 0.8 |
| | Tenacity retention, % | 89 | dissolved | 107 |
| **Toluene** | Tenacity, gf/den | 2.7 | 0.6 | 3.6 |
| | Elongation, % | 29.4 | 11.4 | 31.9 |
| | Modulus, gf/den | 53.2 | 23.0 | 65.2 |
| | Toughness, gf/den | 4.8 | 0.1 | 0.7 |
| | Tenacity retention, % | 86 | 39 | 90 |
| **Methylene chloride** | Tenacity, gf/den | 2.7 | dissolved | 3.5 |
| | Elongation, % | 36.3 | dissolved | 32.7 |
| | Modulus, gf/den | 49.4 | dissolved | 60.8 |
| | Toughness, gf/den | 0.6 | dissolved | 0.7 |
| | Tenacity retention, % | 87 | dissolved | 87 |
| **Sulfuric acid, 20%** | Tenacity, gf/den | 3.0 | 1.7 | 4.7 |
| | Elongation, % | 33.9 | 78.2 | 31.2 |
| | Modulus, gf/den | 55.4 | 21.5 | 77.7 |
| | Toughness, gf/den | 0.7 | 0.8 | 0.9 |
| | Tenacity retention, % | 95 | 105 | 116 |
| **Sulfuric acid, 50%** | Tenacity, gf/den | 1.6 | 1.6 | 3.4 |
| | Elongation, % | 31.3 | 77.5 | 27.5 |
| | Modulus, gf/den | 35.7 | 21.2 | 57.8 |
| | Toughness, gf/den | 0.3 | 0.7 | 0.6 |
| | Tenacity retention, % | 50 | 101 | 84 |
| **Nitric acid, 50%** | Tenacity, gf/den | 1.4 | 1.6 | 3.5 |
| | Elongation, % | 21.2 | 73.4 | 30.1 |
| | Modulus, gf/den | 31 | 24.5 | 64.8 |
| | Toughness, gf/den | 0.2 | 0.8 | 0.7 |
| | Tenacity retention, % | 45 | 104 | 86 |

### Test temperature: 80°C

| | | | | |
|---|---|---|---|---|
| **Sulfuric acid, 20%** | Tenacity, gf/den | 2.5 | 1.6 | 3.9 |
| | Elongation, % | 27.4 | 81.4 | 29.3 |
| | Modulus, gf/den | 59.4 | 21.7 | 68.7 |
| | Toughness, gf/den | 0.5 | 0.8 | 0.7 |
| | Tenacity retention, % | 79 | 100 | 97 |
| **Nitric acid, 20%** | Tenacity, gf/den | 2.5 | 1.6 | 3.7 |
| | Elongation, % | 16.8 | 83.3 | 23.3 |
| | Modulus, gf/den | 58.6 | 23.5 | 67.4 |
| | Toughness, gf/den | 0.3 | 0.8 | 0.5 |
| | Tenacity retention, % | 79 | 101 | 92 |

Preparation of a copolymer comprising sulfone, ketone and polyarylene groups, wherein the number of moles of sulfone groups over the number of moles of ketone groups ratio is greater than 1 (hereinafter, PPSK copolymer).

To a one liter resin kettle equipped with an overhead agitator, nitrogen inlet, reflux condenser with a dean stark trap, was charged 76.3g 4,4'-biphenol, 89.2g of dichlorodiphenylsulfone, 22.6g of 4,4'-difluorobenzophenone, 58.3g of anhydrous potassium carbonate, and 375g of diphenyl sulfone. The reaction mixture was evacuated and backfilled with dry nitrogen three times. The temperature was raised to 275 °C over 2 - 2.5 hours. The polymerization reaction was allowed to proceed with stirring and under a positive flow of nitrogen. Water was collected in the dean stark trap during the polymerization. Dichlorodiphenylsulfone, 2.5g, was then added and the reaction was allowed to proceed for another hour. The hot reaction mixture was poured into a stainless steel pan and allowed to cool down and solidify ; PPSK copolymer in solid state was recovered. The so-recovered PPSK copolymer was ground in a grinder to a free flowing powder. The PPSK powder was then subjected to six acetone washes for 1 hour each followed by six acidified water washes. Finally, the PPSK powder was washed two times with de-ionized water followed by a methanol wash, and dried in a vacuum oven.

### ESCR testing.

The environmental stress cracking resistance of samples was tested according to ISO 22088. RADEL^{®} R 5100 NT PPSU was further tested as a control. Samples were attached to a parabolic test bar that applies a variable strain on the test specimen as a function of the instantaneous radius of curvature of the test bar. The corresponding stress for a material such as PPSU with a modulus of ∼340 ksi ranges from about 1000 psi (at the end of the bar with the smallest curvature) to about 5000 psi (at the end of the bar with the greatest curvature). The surfaces of the samples were exposed to different reagents.

### ESCR test results.

After exposure to MEK for 30s, neat RADEL^{®} R 5100 NT PPSU immediately crazed and cracked into several pieces. There was no effect on the PPSK copolymer. The PPSK copolymer had to immersed in MEK for 2 more minutes before exhibiting complete crazing.

Also, when cyclohexanone was used, RADEL^{®} R 5100 NT PPSU exhibited similarly no crazing resistance, while PPSK exhibited a good crazing resistance.

Similar results were also obtained after immersion in ethylene glycol monoethyl ether and monoethyl ether of diethylene glycol, confirming the superior properties of the PPSK copolymer.

After exposure to THF for 30 s, the entire PPSU specimen exhibited crazing, whereas the PPSK sample showed crazing only in regions of the bar corresponding to a stress above about 4000 psi.

Still other samples were immersed in 2-ethoxyethanol for 30 minutes. After 20 min, the entire PPSU specimen showed crazing whereas the PPSK sample once again showed crazing only in regions of the bar corresponding to a stress above about 4000 psi.

## Claims

1. Fabric comprising a plurality of fibers (F) comprising at least one polymer material (P), **characterized in that** the polymer material (P) is a blend (B12) composed of
- at least one poly(aryl ether ketone) (P1), wherein more than 50 wt.% of the recurring units of said poly(aryl ether ketone) (P1) are recurring units (R1) of one ore more of the following formulae : 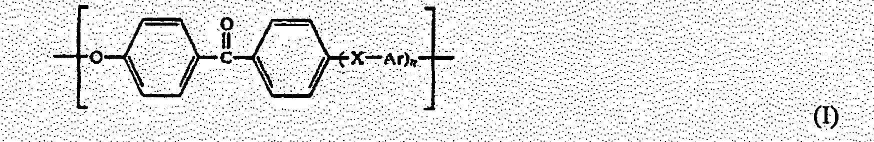 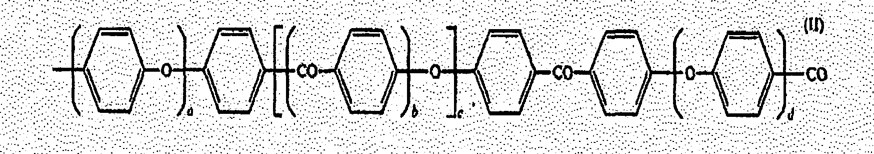 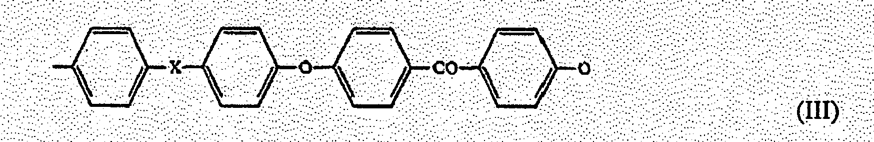 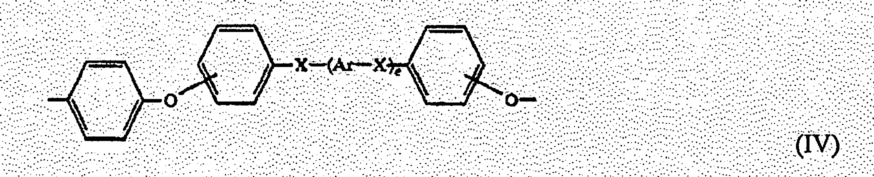 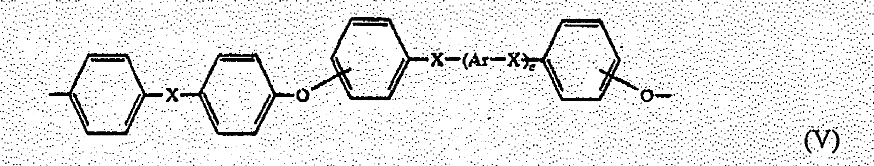
wherein : Ar is independently a divalent aromatic radical selected from phenylene, biphenylene or naphthylene ; X is independently O, C(=O) or a direct bond ; n is an integer of from 0 to 3 ; b, c, d and e are 0 or 1 ; a is an integer of 1 to 4 ; and, preferably, d is 0 when b is 1; and
- at least one poly(aryl ether sulfone) (P2), wherein said poly(aryl ether sulfone) (P2) is poly(biphenyl ether sulfone), more than 50 wt.% of the sulfone) (P2) is poly(biphenyl recurring units of said poly(biphenyl ether sulfone) are recurring units (R2-d) of one or more formulae of the general type : 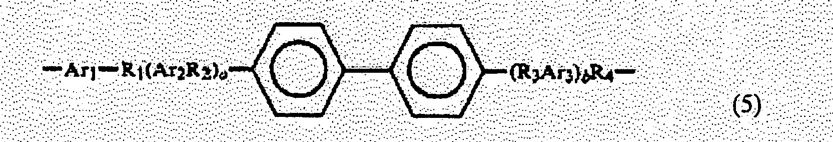
wherein R₁ through R₄ are -O-, -SO₂-, -S-, -CO-, with the proviso that least of R₁ through R₄ is -SO₂- and at least one of R₁ through R₄ is -O- ; Ar₁, Ar₂ and Ar₃ are arylene groups containing 6 to 24 carbon atoms, and are preferably phenylene or p-biphenylene; and a and b are either 0 or 1.

2. Fabric according to any one of the preceding claims, **characterized in that** the poly(aryl ether ketone) (P1) is a a poly(ether ether ketone) and the poly(aryl ether sulfone)(P2) is a polyphenylsulfone, more than 50 wt. % of the recurring units of said polyphenylsulfone are recurring unit (R2-d) of formula (4) :

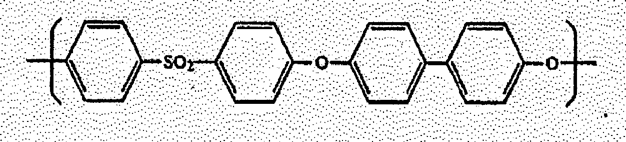

3. Fabric according to any one of to the preceding claims, characerized in that said fibers (F) are obtained by a melt spin process.

4. Fabric according to any one of to the preceding claims, **characterized in that** said fibers (F) are microfibers or nanofibers.

5. Use of the fabric according to any one of claims 1 to 4 in aerospace, automotive, medical, military or safety applications.

6. Filter device comprising the fabric according to any one of claims 1

7. Filter assembly comprising a frame and a fabric mounted on said frame, **characterized in that** said fabric is the fabric according to anyone of claims 1 to 4.

8. Filtration system comprising a plurality of filter assemblies, at least one of them being the filter assembly according to claim 7.

9. Filtration system according to claim 8, further comprising a gas inlet configured to receive a gas from a coal burning power generation plant or a cement plant.

10. Filtration system according to claim 9, which receives a gas from a coal burning power generation plant or a cement plant.

11. Use of the fabric according to any one of claims 1 to 4 or the filter device according to claim 8 or the filter assembly according to claim 7 or the filtration system according to any one of claims 8 to 10 for the removal of solid particles from an acid gas.

12. Use according to claim 11, **characterized in that** the acid gas is a flue gas from a coal burning power generation plant.

13. Use according to claim 11 or 12, **characterized in that** the acid gas contains carbon dioxide, the carbon dioxide content of said gas exceeding 10 vol. % and the solid particle loading of said acid gas exceeding 1000 µg/m₀³.

## Patentansprüche

1. Textilgewebe, umfassend eine Vielzahl von Fasern (F), die mindestens ein Polymermaterial (P) umfassen, **dadurch gekennzeichnet, dass** das Polymermaterial (P) eine Mischung (B 12) ist bestehend aus
- mindestens einem Poly(aryletherketon) (P1), wobei mehr als 50 Gew. % der wiederkehrenden Einheiten des Poly(aryletherketons) (P1) wiederkehrende Einheiten nach einer oder mehrerer der Formeln 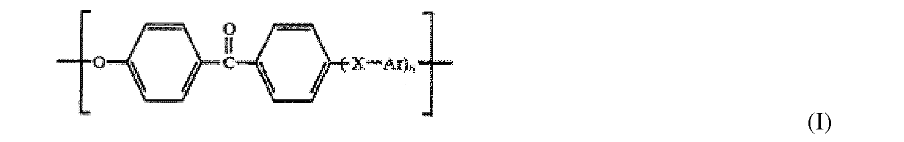 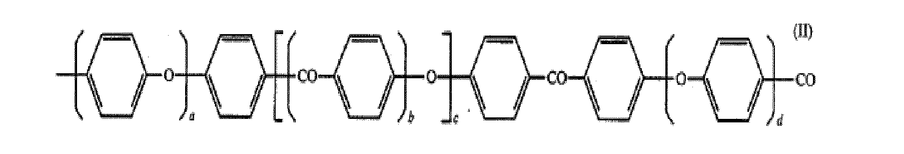 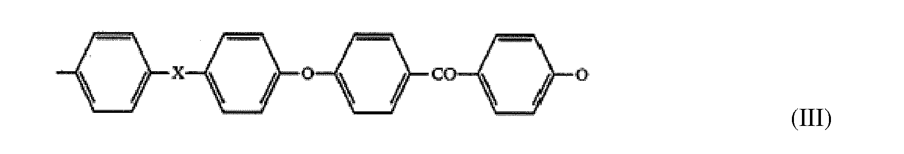 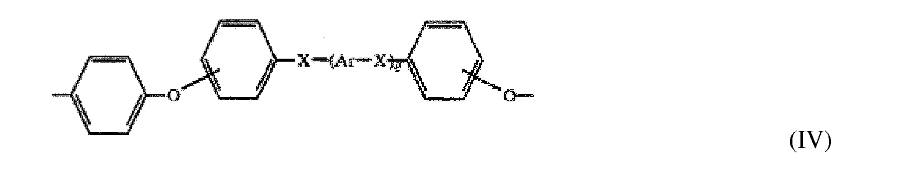 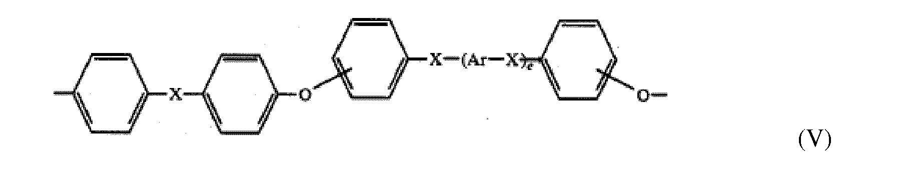 sind ;
wobei Ar unabhängig ein zweiwertiger aromatischer Rest ausgewählt aus Phenylen, Biphenylen oder Naphthylen ist; X ist unabhängig O, C(= O) oder eine direkte Bindung ; n ist eine ganze Zahl von 0 bis 3 ; b, c, d und e sind 0 oder 1 ; a ist eine ganze Zahl von 1 bis 4 ; und vorzugsweise ist d 0 wenn b 1 ist ; und
- mindestens einem Poly(arylethersulfon) (P2), wobei das Poly(arylethersulfon) (P2) Poly(biphenylethersulfon) ist und mehr als 50 Gew. % der wiederkehrenden Einheiten des Poly(biphenylethersulfons) wiederkehrende Einheiten (R2-d) nach einer oder mehreren Formeln des allgemeinen Typs 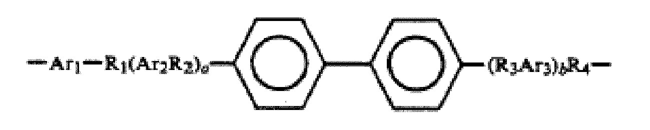 sind ;
wobei R₁ bis R₄ -O-,-SO₂-,-S-,-CO- sind, mit der Maßgabe, dass mindestens einer von R₁ bis R₄ -SO₂- ist und mindestens einer von R₁ bis R₄ -O- ist; Ar₁, Ar₂ und Ar₃ Arylengruppen mit 6 bis 24 Kohlenstoffatomen, vorzugsweise Phenylen oder p-Biphenylen, sind , und a und b entweder 0 oder 1 sind.

2. Textilgewebe gemäß Anspruch 1, **dadurch gekennzeichnet, dass**
das Poly(aryletherketon) (P1) ein Poly(etheretherketon) ist und das Poly(arylethersulfon) (P2) ein Polyphenylsulfon ist und mehr als 50 Gew. % der wiederkehrenden Einheiten des Polyphenylsulfons wiederkehrende Einheiten (R2-d) der Formel (4) 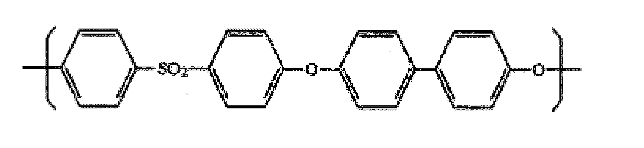 sind.

3. Textilgewebe gemäß einem der vorausgehenden Ansprüche, **dadurch gekennzeichnet, dass** die Fasern (F) durch ein Schmelzspinnverfahren erhalten werden.

4. Textilgewebe gemäß einem der vorausgehenden Ansprüche, **dadurch gekennzeichnet, dass** die Fasern (F) sind Mikrofasern oder Nanofasern.

5. Verwendung des Textilgewebes gemäß einem der Ansprüche 1 bis 7 in Raumfahrt-, Kraftfahrzeug-, medizinischen, militärischen oder Sicherheitsanwendungen.

6. Filtervorrichtung, umfassend das Textilgewebe gemäß einem der Ansprüche 1 bis 4.

7. Filteranordnung, umfassend einen Rahmen und ein auf dem Rahmen montiertes Textilgewebe, **dadurch gekennzeichnet, dass** das Textilgewebe das Textilgewebe gemäß einem der Ansprüche 1 bis 4 ist.

8. Filtrationssystem, umfassend eine Vielzahl von Filteranordnungen, von denen mindestens eine die Filteranordnung gemäß Anspruch 7 ist.

9. Filtrationssystem gemäß Anspruch 8, weiterhin umfassend einen Gaseinlass, der für die Aufnahme konfiguriert ist, und der ein Gas von einer Kohleverbrennungs-Energieerzeugungsanlage oder einer Zementanlage aufnimmt.

10. Filtrationssystem gemäß Anspruch 9, die ein Gas aus einer Kohleverbrennung Krafterzeugungsanlage oder einem Zementwerk Anspruch.

11. Verwendung des Textilgewebes gemäß einem der Ansprüche 1 bis 4 oder der Filtervorrichtung gemäß Anspruch 6 oder der Filteranordnung gemäß Anspruch 7 oder das Filtrationssystem nach einem der Ansprüche 8 bis 10 zur Entfernung von Feststoffteilchen aus einem Säuregas.

12. Verwendung gemäß Anspruch 11, wobei das Säuregas ist ein Rauchgas aus einer Verbrennung von Kohle Kraftwerk.

13. Verwendung gemäß Anspruch 11 oder 12, wobei das Säuregas Kohlendioxid enthält, wobei der Kohlendioxidgehalt des Säuregases 10 Vol.-% übersteigt und die Feststoffteilchenbeladung des Säuregases 1000 µg/m₀³ übersteigt.

## Revendications

1. Tissu comprenant une pluralité de fibres (F) comprenant au moins un matériau polymère (P), **caractérisé en ce que** le matériau polymère (P) est un mélange (B 12) constitué de :
- au moins une poly(aryléther-cétone) (P1), où plus de 50 % en poids des motifs récurrents de ladite poly(aryléther-cétone) (P1) sont des motifs récurrents de formule 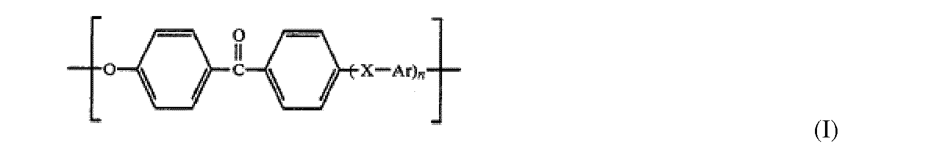 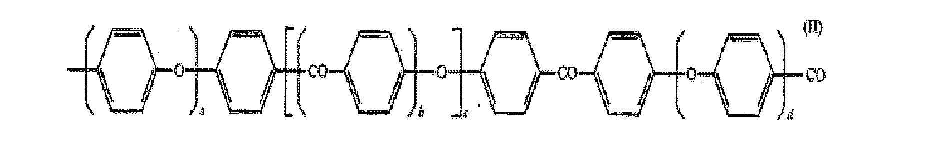 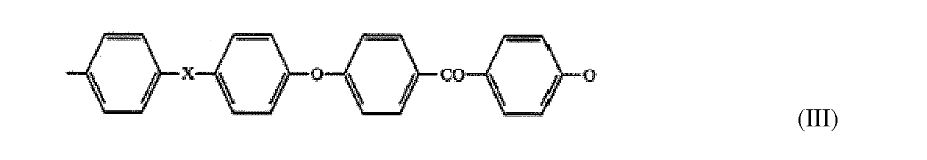 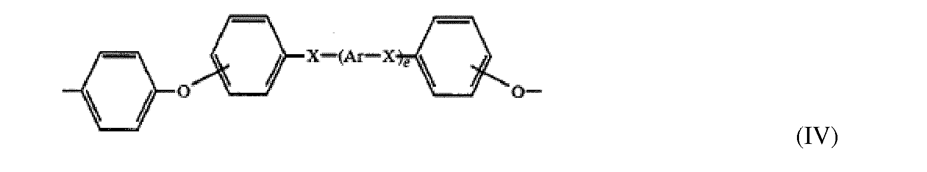 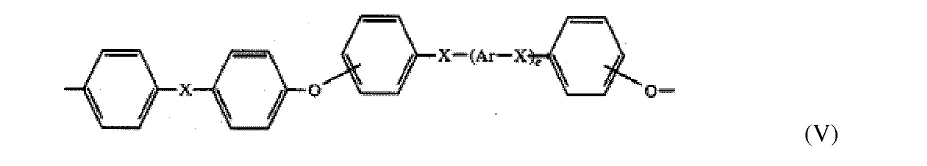 dans laquelle : Ar représente indépendamment un radical aromatique divalent choisi parmi un groupe phénylène, biphénylène ou naphtylène, X représente indépendamment O, C(= O) ou une liaison directe, n est un nombre entier de 0 à 3, b, c, d et e sont égaux à 0 ou 1, a est un nombre entier de 1 à 4 et, de préférence, d est égal à 0 lorsque b est égal à 1 ; et
- au moins une poly(aryl ether sulfone) (P2), où ladite poly(aryl ether sulfone) (P2) est une poly(biphényl éther sulfone), plus de 50 % en poids des motifs récurrents de ladite poly(biphényl éther sulfone) sont des motifs récurrents (R2-d) d'une ou plus formules générales du type : 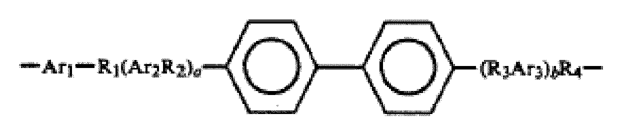 dans laquelle R₁ à R₄ sont-O-,-SO₂-,-S-,-CO-, avec la condition qu'au moins des R₁ à R₄ représente un groupe-SO₂-, et au moins l'un des R₁ à R₄ représente un groupe -O- ; Ar₁, Ar₂ et Ar₃ sont des groupes arylène contenant 6 à 24 atomes de carbone, et sont de préférence phénylène ou p-biphénylène, et a et b sont 0 ou 1.

2. Tissu selon l'une quelconque des revendications précédentes, **caractérisé en ce que** le poly(aryl éther cétone) (P1) est une poly(éther éther cétone) et la poly(aryl éther sulfone) (P2) est une polyphénylsulfone, plus de 50 % en poids des motifs récurrents de ladite polyphénylsulfone sont des motifs récurrents (R2-d) de formule (4) :

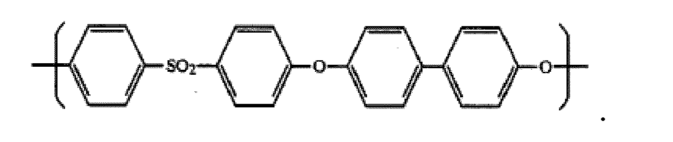

3. Tissu selon l'une quelconque des revendications précédentes, **caractérisé en ce que** lesdites fibres (F) sont obtenues par un processus de filature en fusion.

4. Tissu selon l'une quelconque des revendications précédentes, **caractérisé en ce que** lesdites fibres (F) sont des microfibers ou des nanofibers.

5. Utilisation du tissu selon l'une quelconque des revendications 1 à 4 dans des applications aérospatiales, automobiles, médicales, militaires, ou de sécurité.

6. Dispositif filtrant comprenant le tissu selon l'une quelconque des revendications 1 à 4.

7. Ensemble filtrant comprenant un cadre et un tissu monté sur ledit cadre, **caractérisé en ce que** ledit tissu est le tissu selon l'une quelconque des revendications 1 à 4.

8. Système de filtration comprenant une pluralité d'ensembles filtrants, au moins l'un de ceux-ci étant l'ensemble filtrant selon la revendication 7.

9. Système de filtration selon la revendication 8, comprenant en outre une admission de gaz configurée pour recevoir, et recevant, un gaz provenant d'une centrale thermique à charbon ou d'une cimenterie.

10. Système de filtration selon la revendication 9, qui reçoit un gaz provenant d'une centrale thermique à charbon ou d'une cimenterie.

11. Utilisation du tissu selon l'une quelconque des revendications 1 à 4 ou du dispositif filtrant selon la revendication 6 ou de l'ensemble filtrant selon la revendication 7 ou du système de filtration selon l'une quelconque des revendications 8 à 10 pour l'élimination de particules solides d'un gaz acide.

12. Utilisation selon la revendication 11, **caractérisé en ce que** le gaz acide est un gaz de combustion provenant d'une centrale thermique à charbon.

13. Utilisation selon la revendication 11 ou 12, dans laquelle le gaz acide contient du dioxyde de carbone, la teneur en dioxyde de carbone dudit gaz acide dépassant un pourcentage volumique de 10 % et la charge en particules solides dudit gaz acide dépassant 1 000 µg/m₀³.
